# EUROPEAN PATENT SPECIFICATION

(11) **EP 4 283 481 B1**
(45) Date of publication and mention of the grant of the patent: **16.07.2025**
(21) Application number: 22774120.4
(22) Date of filing: 17.03.2022
(51) Int. Cl.: G06F 15/78

(54) **RECONFIGURABLE PROCESSOR AND CONFIGURATION METHOD**
REKONFIGURIERBARER PROZESSOR UND KONFIGURATIONSVERFAHREN
PROCESSEUR RECONFIGURABLE ET PROCÉDÉ DE CONFIGURATION

(30) Priority: 24.03.2021 CN 202110311617
(43) Date of publication of application: 29.11.2023
(73) Proprietor: Amicro Semiconductor Co., Ltd., Hengqin New District, Zhuhai City Guangdong 519000 (CN)
(72) Inventor: ZHAO, Wang, Zhuhai, Guangdong 519000 (CN); XIAO, Gangjun, Zhuhai, Guangdong 519000 (CN); LAI, Qinwei, Zhuhai, Guangdong 519000 (CN)
(74) Representative: Berggren Oy
(86) International application number: PCT/CN2022/081526
(87) International publication number: WO 2022/199459

(56) References cited:
- CN-A- 107 506 329
- CN-A- 108 228 966
- CN-A- 108 647 773
- CN-A- 110 059 493
- CN-A- 110 321 162
- CN-A- 113 064 852
- KR-A- 20060 090 512
- US-A1- 2016 149 580
- US-A1- 2019 377 580

## Description

### Technical Field

The present disclosure relates to the technical field of reconfigurable computation, and more particularly relates to a reconfigurable processor and a configuration method.

### Background

Reconfigurable computation refers to a computing system that can utilize reusable hardware resources to flexibly reconfigure computation paths based on different application requirements, in order to provide a matched computation structure for each specific application requirements. Serving as a novel high-performance computation structure, a coarse-grained reconfigurable processor has advantages of general-purpose computation and dedicated computation, which is well balanced in programming flexibility and computation energy efficiency. A reconfigurable array, as a computation core of the reconfigurable processor, has a significant influence on performance of a reconfigurable system in terms of efficiency and flexibility. A reconfigurable array structure of the existing coarse-grained reconfigurable processor often neglects the inside pipelining nature, causing that complex operation becomes a bottleneck in computation speed of the reconfigurable array, the clock frequency is not high, and the computing efficiency is low.

In the coarse-grained reconfigurable system structure, the reconfigurable array includes fully-functioning compute units, such as an adder-subtractor, a multiplier, a divider, a square root calculator and a trigonometric function calculator. In order to ensure the high clock frequency and computing efficiency of the reconfigurable processor, most of these compute units are designed in a pipelining manner. Computations to be realized are different in complexity, and computation pipelining depths of different compute units are usually different, causing that it is difficult for the reconfigurable array to realize overall pipelining data processing, which restricts improvement of the pipelining computation performance of the reconfigurable processor.

In addition, a patent document with publication number US2019377580A1 discloses: A processor including an instruction fetcher to fetch instructions, a decoder to decode the instructions, at least one load unit adapted to load data, at least one execution unit adapted to perform arithmetic computations on the data by executing the fetched and decoded instructions, a register file adapted to store results of the arithmetic computations, and a multiplexer arrangement provided such that one or more units of the execution unit selectively obtain operands from one of: the register file or a unit used for arithmetic computation of a preceding instruction. The processor is adapted to process and execute the instructions such that processing of the instructions is started under the following conditions: the execution unit is ready for instruction execution, and data from the at least one load unit is available to the at least one execution unit.

A patent document with publication number KR20060090512A discloses: reconfigurable architecture having a resource sharing and pipelining configuration is provided to reduce size by sharing function resources occupying the largest area in a processing element with the processing elements arranged to each row/column, and reduce the size and maximum delay by pipelining the shared resources. More than two processing elements receive an operand from a memory bus or other processing elements. A bus switch receives the operand from the processing element by connecting to the processing element one to one. The shared resources are shared with more than two processing elements, and perform an operation by receiving the operand from the bus switch connected through a data bus. A configuration cache performs a function for controlling that the bus switch transmits the operand to which shared resource in case of more than two shared resources.

### Summary

The present invention is defined by the independent claims. Advantageous embodiments are described by the dependent claims.

The present disclosure discloses a reconfigurable processor for adaptively configuring a pipeline depth and performing multi-stage pipeline control over a reconfigurable array. The specific technical solution includes: a reconfigurable processor, including a reconfiguration configuration unit and a reconfigurable array. The reconfiguration configuration unit is configured to provide, according to an algorithm matched with a current application scenario, reconfiguration information used for reconfiguring a computation structure in the reconfigurable array. The reconfigurable array includes at least two stages of computational arrays, the reconfigurable array is configured to connect, according to the reconfiguration information provided by the reconfiguration configuration unit, adjacent two stages of the computational arrays to form a data path pipeline structure satisfying computation requirements of the algorithm matched with the current application scenario.. At least one computation module is set in each stage of the computational array. In a case that at least two the computation modules are set in one stage of the computational array, pipeline depths of different computation modules connected to the data path pipeline structure are equal, such that the different computation modules connected to the data path pipeline structure synchronously output data. One the computational array is set on each column of the reconfigurable array, each the computational array is one stage of the computational array, the number of the computational arrays is preset, and these computational arrays exist in the reconfigurable array in a cascaded structure. Each stage of pipeline of the data path pipeline structure corresponds to one stage of the computational array; and the computation module connected to the data path pipeline structure within each stage of the computational array is equivalent to a corresponding stage of pipeline connected to the data path pipeline structure, and the pipeline depth is time consumed for data to flow through the corresponding data path of the data path pipeline structure.

Optionally, the reconfigurable processor further includes an input FIFO group and an output FIFO group. Output ends of the input FIFO group are respectively in corresponding connection with input ends of the reconfigurable array, and the reconfigurable array is configured to receive, according to the reconfiguration information, data-to-be-computed transmitted from the input FIFO group, and transmit the data-to-be-computed to the data path pipeline structure; and input ends of the output FIFO group are respectively in corresponding connection with output ends of the reconfigurable array, and the reconfigurable array is further configured to provide, according to the reconfiguration information, output data of one stage of computational array corresponding to a last-stage pipeline of the data path pipeline structure to the output FIFO group.

Optionally, in the reconfigurable array, a manner of connecting the adjacent stages of the computational arrays to form the data path pipeline structure satisfying the computation requirements of the algorithm includes: two non-adjacent stages of the computational arrays are not in cross-stage connection through a data path, such that the two non-adjacent stages of the computational arrays are not directly connected to form the data path pipeline structure; there is no data path between different computation modules in the same stage of the computational array; input ends of the computation modules in a first-stage computational array serve as the input ends of the reconfigurable array and are configured to be connected with the matched output ends of the input FIFO group based on the reconfiguration information; input ends of the computation modules in a current stage of the computational array are configured to be connected, based on the reconfiguration information, with output ends of the computation modules on matched rows in an adjacent previous stage of computational array, and the current stage of the computational array is not the first-stage computational array in the reconfigurable array; output ends of the computation modules in the current stage of computational array are configured to be connected, based on the reconfiguration information, with input ends of the computation modules on matched rows in an adjacent next stage of computational array, and the current stage of computational array is not a last-stage computational array in the reconfigurable array; and output ends of the computation modules in the last-stage computational array serve as the output ends of the reconfigurable array and are configured to be connected with the matched input ends of the output FIFO group based on the reconfiguration information, and the adjacent previous stage of the computational array is one level lower than the current stage of the computational array, and the adjacent next stage of the computational array is one level higher than the current stage of the computational array; and the data path is a path for data transmission.

Optionally, the reconfiguration information of the computation module provided by the reconfiguration configuration unit includes: second configuration information, first configuration information and third configuration information. The computation module includes a computation control unit, a compensation unit, a first interconnection unit and a second interconnection unit; the first interconnection unit is configured to connect, according to the first configuration information, the first interconnection unit and the computation control unit to a current stage of pipeline of the data path pipeline structure, and the first interconnection unit is configured to input data-to-be-computed output by a matched output end within the input FIFO group to the computation control unit when the current stage of pipeline corresponds to a first-stage computational array; the first interconnection unit is further configured to input a computation result output by a matched computation module within the adjacent previous stage of computational array to the computation control unit when the current stage of pipeline does not correspond to the first-stage computational array; the computation control unit is configured to be selectively connected, according to the second configuration information, to form a data through path so as to control data input into the computation control unit to directly pass and be transmitted to the compensation unit without executing the computation, or be selectively connected to form a data computation path so as to control the data input into the computation control unit to be transmitted to the compensation unit after the computation is executed; the data path includes the data through path and the data computation path; the compensation unit is configured to select, according to the third configuration information, a corresponding delay difference to perform delay compensation on the pipeline depth of the same computation module to obtain a maximum pipeline depth allowed by the current stage of computational array; the second interconnection unit is configured to connect, according to the first configuration information, the second interconnection unit and the compensation unit to the current stage of pipeline of the data path pipeline structure, and the second interconnection unit is configured to transmit data subject to delay compensation processing by the compensation unit to a matched output FIFO in the output FIFO group when the current stage of pipeline corresponds to the last-stage computational array; the second interconnection unit is further configured to transmit the data subject to delay compensation processing by the compensation unit to a matched computation module within the adjacent next stage of computational array when the current stage of pipeline does not correspond to the last-stage computational array; and in the same computation module of the current stage of computational array, an input end of the first interconnection unit is an input end of the computation module, an output end of the first interconnection unit is connected with an input end of the computation control unit, an output end of the computation control unit is connected with an input end of the compensation unit, an output end of the compensation unit is connected with an input end of the second interconnection unit, and an output end of the second interconnection unit is an output end of the computation module.

Optionally, the third configuration information is a kind of gating signal, and is used for selecting, within all the computation modules of the current stage of the pipeline, a matched register path used for generating the delay difference in the compensation unit after the reconfiguration configuration unit determines the computation control unit, consuming the maximum pipeline depth, in the current stage of the pipeline of the data path pipeline structure, and then control output data of the computation control unit of the current stage of the pipeline to be transmitted on the register path until the data is output to the corresponding computation module, thereby determining: delay compensation of the pipeline depths of the computation modules of the current stage of pipeline to the maximum pipeline depth allowed by the current stage of computational array, and the compensation unit is implemented by a selector and a register, and the maximum pipeline depth allowed by the current stage of computational array is the pipeline depth of the computation control unit where it takes the longest time for data to flow through the corresponding data path of the data path pipeline structure.

Optionally, the register path used for compensating for the delay difference in the compensation unit is composed of a preset number of registers, and these registers store, under the effect of triggering of the third configuration information, data output by the computation control unit within the same computation module, and the stored generated delay difference is equal to a time difference obtained by subtracting the maximum pipeline depth allowed within the current stage of the computational array from the pipeline depth of the computation control unit connected with the compensation unit within the same computation module.

Optionally, the first configuration information includes: access address information and time information required for connecting the first interconnection unit in the first-stage computational array and a matched input FIFO arranged in the input FIFO group to the data path pipeline structure, access address information and time information required for connecting the first interconnection unit in the current stage of the computational array and the matched second interconnection unit in the adjacent previous stage of computational array to the data path pipeline structure, access address information and time information required for connecting the second interconnection unit in the current stage of the computational array and the matched first interconnection unit in the adjacent next stage of computational array to the data path pipeline structure, and access address information and time information required for connecting the second interconnection unit in the last-stage computational array and a matched output FIFO arranged in the output FIFO group to the data path pipeline structure, and the first interconnection unit and the second interconnection unit both support formation of a topology structure for interconnection of the computation modules in the reconfigurable array or the data path pipeline structure, thereby realizing complete functions of the algorithm.

Optionally, the second configuration information is also a kind of gating signal and is used for controlling data transmitted by the first interconnection unit to be selectively output between the data through path and the data computation path, thereby satisfying the computation requirements of the algorithm in each stage of pipeline of the data path pipeline structure, and the computation control unit is implemented by a data selector and an arithmetic logic circuit.

Optionally, computation types executed by the computation control unit include addition and subtraction, multiplication, division, square root extraction and trigonometric computation, and the computation types of the computation control units within each stage of the computational array may be either partially the same or all the same, and the computation types of the computation control units of two adjacent stages of the computational arrays may be either partially the same or all the same.

Optionally, the reconfigurable array has six stages of the computational arrays, and each stage of the computational array has four rows of the computation modules. The six stages of the computational arrays are connected to form a six-stage pipeline under the configuration of the reconfiguration information provided by the reconfiguration configuration unit, such that the data path pipeline structure is formed, and computing operation of specific granularity is supported, and there is only one computation module set in each row within the same stage of the computational array. Input ends of four computation modules set in the first-stage computational array are respectively connected to output ends of four different input FIFOs within the input FIFO group based on the reconfiguration information, and an output end of one computation module set in the sixth-stage computational array is connected to an output end of one output FIFO within the output FIFO group based on the reconfiguration information.

A configuration method based on the reconfigurable processor includes: connecting, according to computation requirements of an algorithm matched with a current application scenario, adjacent stages of computational arrays of the reconfigurable array to form a data path pipeline structure which supports data to pass, with the equal pipeline depth, through different computation modules within the same stage of computational array and satisfies the computation requirements of the algorithm matched with the current application scenario, and each stage of pipeline of the data path pipeline structure corresponds to one stage of the computational array, a computation module connected to a data path within the current stage of the computational array is a current stage of pipeline connected to the data path pipeline structure, and the pipeline depth is time consumed for data to flow through the corresponding data path of the data path pipeline structure.

Optionally, the configuration method further includes: configuring the reconfigurable array to receive data-to-be-computed transmitted from the input FIFO group, and transmitting the data-to-be-computed to the data path pipeline structure, and meanwhile configuring the reconfigurable array to output a computation result of a computational array corresponding to a last stage of the data path pipeline structure to the output FIFO group.

Optionally, the specific configuration method for connecting to form the data path pipeline structure includes: judging, within one computation module of the current stage of the computational array, whether the current stage of the computational array is detected as a first-stage pipeline corresponding to the data path pipeline structure or not, in a case that the current stage of the computational array is detected as the first-stage pipeline corresponding to the data path pipeline structure, connecting a first interconnection unit and a computation control unit to form the first-stage pipeline of the data path pipeline structure, and configuring the first interconnection unit to input data-to-be-computed output by a matched output end within the input FIFO group to the computation control unit; in a case that the current stage of the computational array is not detected as the first-stage pipeline corresponding to the data path pipeline structure, connecting the first interconnection unit and the computation control unit to form the current stage of the pipeline of the data path pipeline structure, and configuring the first interconnection unit to input the computation result output by a matched computation module within the adjacent previous stage of the computational array to the computation control unit; judging whether the current stage of the computational array is detected as a corresponding last-stage pipeline or not, in a case that the current stage of the computational array is detected as the corresponding last-stage pipeline, connecting a second interconnection unit and a compensation unit to form the last-stage pipeline of the data path pipeline structure, and configuring the second interconnection unit to transmit data subject to delay compensation processing by the compensation unit to a matched output FIFO within the output FIFO group; and in a case that the current stage of the computational array is not detected as the corresponding last-stage pipeline, connecting the second interconnection unit and the compensation unit to form the current stage of the pipeline of the data path pipeline structure, and configuring the second interconnection unit to transmit the data subject to delay compensation processing by the compensation unit to a matched computation module within the adjacent next stage of the computational array; judging whether the computation control unit detects a computation gating signal or not, in a case that the computation control unit detects the computation gating signal, configuring data, input into the computation control unit, to be output to the compensation unit after computation is executed, and in a case that the computation control unit not detects the computation gating signal, configuring the data, input into the computation control unit, to directly pass and be transmitted to the compensation unit without executing the computation; and then, configuring the compensation unit to select a corresponding delay difference to perform delay processing on the output data of the computation control unit within the same computation module, thereby performing delay compensation on the pipeline depth of the same computation module to the maximum pipeline depth allowed by the current stage of the computational array, and the maximum pipeline depth allowed by the current stage of computational array is the pipeline depth of the computation control unit where it takes the longest time for data to flow through the data path within the current stage of computational array; the computation module includes the computation control unit, the compensation unit, the first interconnection unit and the second interconnection unit; and in the same computation module of each stage of computational array, an input end of the first interconnection unit is an input end of the computation module, an output end of the first interconnection unit is connected with an input end of the computation control unit, an output end of the computation control unit is connected with an input end of the compensation unit, an output end of the compensation unit is connected with an input end of the second interconnection unit, and an output end of the second interconnection unit is an output end of the computation module.

Optionally, in the reconfigurable array, the two non-adjacent stages of the computational arrays are not in cross-stage connection through the data path, such that the two non-adjacent stages of the computational arrays are not directly connected to form the data path pipeline structure; and there is no data path between different computation modules within the same stage of computational array, and the data path is a path for data transmission.

### Description of the drawings

Fig. 1 is a schematic structural diagram of a reconfigurable processor according to an embodiment of the present disclosure.
Fig. 2 is a schematic diagram of a reconfigurable array with a 6-stage pipeline consisting of six stages of computational arrays (there are four rows of computation modules within each stage of the computational array) in a reconfigurable processor according to an embodiment of the present disclosure, the reconfigurable array shown in Fig. 2 having four different input ends to be respectively connected with four different input FIFOs, and the reconfigurable array shown in Fig. 2 having one output end to be connected with one output FIFO.
Fig. 3 is a schematic diagram of an interconnected logic structure among a computation module (a-1)_b1 at a b1^{th} row within an (a-1)^{th}-stage computational array, a computation module a_b2 at a b2^{th} row within an a^{th}-stage computational array, and a computation module (a+1)_b3 at a b3th row within an (a+1)^{th}-stage computational array according to an embodiment of the present disclosure.
Fig.4 is a flowchart of a configuration method based on a configurable processor according to another embodiment of the present disclosure.

### Detailed Description of the Embodiments

Specific implementations of the present disclosure are further described in conjunction with drawings. Various unit modules involved in the following implementations are all logic circuits. One the logic circuit may be a physical unit, or a state machine formed through varying combination of a plurality of logic devices according to a certain read-write time sequence and signal logics, or a part of one the physical unit, or may be implemented by combination of a plurality of the physical units. In addition, to highlight the innovative part of the present disclosure, the implementations of the present disclosure do not introduce units which are not closely related to the technical problems proposed by the present disclosure, which does not imply the absence of other units in the implementations of the present disclosure.

As an embodiment, the present disclosure discloses a reconfigurable processor. The reconfigurable processor includes a reconfiguration configuration unit and a reconfigurable array. The reconfiguration configuration unit is configured to provide reconfiguration information of computation modules according to an algorithm matched with a current application scenario, and the reconfiguration information is information configured according to requirements of the algorithm and used for reconfiguring a computation structure in the reconfigurable array and is actually external reconfiguration information (including combined parameters and time sequence parameters of logic circuits) received by the reconfigurable processor specific to the current data processing application scenario and used for changing interconnection logics of the computation modules. The reconfiguration processor changes, based on the reconfiguration information, a physical architecture formed by connecting the plurality of computation modules, and then, the reconfigurable processor outputs a computation result, which is equivalent to invoking, by software programming in current data processing application scenario, an algorithm (an algorithms library function) to calculate a corresponding computation result. Specific to different application requirements, when the reconfigurable processor transitions from one configuration to another, the reconfigurable array may perform connection to form computation structures matched with different application requirements, so as to not only be designed for several algorithms in the specific field, but also receive reconfiguration information of porting algorithms into other fields, thereby improving flexibility.

The reconfigurable array includes at least two stages of computational arrays. There are at least two computational arrays in the reconfigurable array in a grading manner, that is, at least two computational arrays are in cascading connection, which may also mean that there are at least two columns of adjacent computational arrays or at least two stages of adjacent computational arrays, and only one computational array is set on each column of the reconfigurable array, and the computational array on each column is one stage of the computational array; and the number of the computational arrays in the reconfigurable array is preset, and these computational arrays exist in the reconfigurable array in the form of a cascaded structure. The following content correspondingly describes a pipeline, and uses one stage of the computational array for describing a column of the computational array. Thus, an interconnection architecture of the reconfigurable array can be formed through subsequent connection on hardware.

The reconfigurable array is configured to connect, according to the reconfiguration information provided by the reconfiguration configuration unit, two adjacent stages of the computational arrays to form a data path pipeline structure satisfying computation requirements of an algorithm. Each stage of pipeline of the data path pipeline structure corresponds to one stage of the computational array, that is, the corresponding one stage of pipeline is described with one stage of the computational array as a unit in the data path pipeline structure. It is to be emphasized that in the current one stage of the computational array, only the computation module connected to a data path is regarded as the current one stage of pipeline of the data path pipeline structure, because the stage number of the computational arrays or the number of the computational arrays is preset, the computational arrays are hardware resources pre-stored in the reconfigurable array, and the data path pipeline structure is formed, on the basis of the existing computational arrays, by configuring interconnection logics between the adjacent computational arrays according to the reconfiguration information provided by the reconfiguration configuration unit.

In one configurable array, the two adjacent stages of the computational arrays are connected in a manner of pairwise adjacent interconnections (equivalent to pairwise interconnections) to form the data path pipeline structure satisfying computation requirements of the algorithm. When the reconfiguration information changes, corresponding computation requirements for executing the algorithm correspondingly change, and thus, adjacent columns of the computational arrays are reconnected based on the changed reconfiguration information, thereby executing the algorithm matched with the current application scenario in a manner of a hardware circuit. Meanwhile, a pipeline depth of the data path pipeline structure formed by connecting two adjacent stages of the computational arrays is automatically adjusted, that is, the pipeline depth of the data path pipeline structure can change or cannot change, such that the pipeline depth of the data path pipeline structure adaptively changes along with changes of the reconfiguration information.

In the data path pipeline structure, the pipeline depth of different computation modules within the same stage of the computational array is the same and is equal to a maximum pipeline depth allowed by the same stage of the computational array. Because the computation module with the relatively small pipeline depth consumes short time in executing the computing operation and is required to be delayed to wait for the computation module with the relatively large pipeline depth to execute the computing operation, the maximum pipeline depth allowed by the same stage of computational array is the maximum pipeline depth of the computation module within the same stage of the computational array for executing the computing operation in the pipeline or a preset multiple of the maximum pipeline depth belonging to the computation module, but considering the data computing efficiency and clock efficiency, it is generally sufficient to set the maximum pipeline depth in the computation module for executing the computing operation in the pipeline. It is guaranteed that the different computation modules within the same stage of the computational array synchronously output (parallel output) data, thereby increasing the throughput of the reconfigurable processor.

It should be noted that as known to those of ordinary skill in the art, all the pipeline depths of the present disclosure are time consumed by data passing through corresponding data paths in the data path pipeline structure, including data transmission time and computation processing time; and each stage of the pipeline of the data path pipeline structure corresponds to one stage of the computational array, that is, an n^{th}-stage computational array belongs to an n^{th}-stage pipeline, computation modules (hardware resources) connected to a data path in the n^{th}-stage computational array are connected to the n^{th}-stage pipeline, and namely, are connected to the data path pipeline structure.

It should be noted that in one reconfigurable array, the pipeline depth of the data path pipeline structure is the sum of pipeline depths of all stages of the computational arrays connected to the data path pipeline structure (or the data path) in the reconfigurable array.

Compared with the prior art, the reconfigurable processor disclosed by the embodiment reconfigures, based on the adjacent interconnected computation modules for executing computing instructions, the data path pipeline structure adjusting the pipeline depth of each stage of the computational array where data passes to be equal and satisfying the computation requirements of the algorithm, such that the reconfigurable processor can configure adaptive pipeline depths according to different algorithms, and on this basis, realizes overall pipelining of data processing operation of the reconfigurable array, thereby increasing the throughput of the reconfigurable processor and sufficiently utilizing computing performance of the reconfigurable processor. The hardware resources required to be configured for pipeline design in the prior art are reduced as well. Self-adaptive changing of the pipeline depth of the data path pipeline structure along with changes of the reconfiguration information are embodied in: when the reconfiguration configuration unit is switched from providing a kind of reconfiguration information into providing another kind of reconfiguration information according to different computation application requirements, the data path pipeline structure to which the data has access within the reconfigurable array changes, thereby adaptively adjusting the pipeline depth of the data path pipeline structure.

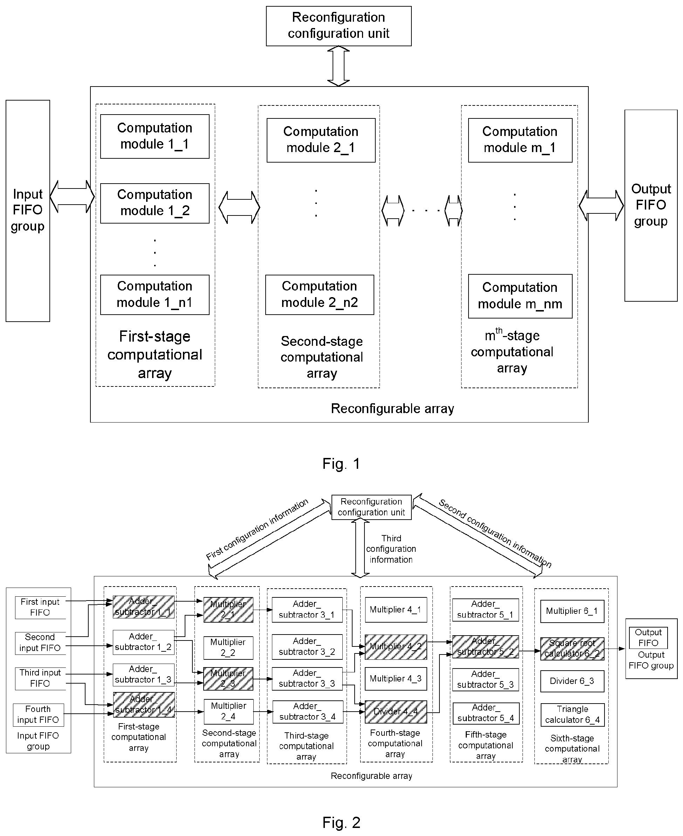

As shown in Fig. 1, the reconfigurable processor further includes an input FIFO group and an output FIFO group. Output ends of the input FIFO group are respectively in corresponding connection with input ends of the reconfigurable array, the corresponding connection refers to connection of input ends of the computation modules, connected to the data path pipeline structure, of a first-level computational array of the reconfigurable array configured according to the reconfiguration information and the matched output ends of the input FIFO group, the reconfigurable array is configured to receive, according to the reconfiguration information, data-to-be-computed transmitted from the input FIFO group, and transmit the data-to-be-computed to the data path pipeline structure. Input ends of the output FIFO group are respectively in corresponding connection with output ends of the reconfigurable array, the corresponding connection refers to connection of output ends of the computation modules, connected to the data path pipeline structure, of a last-stage computational array of the reconfigurable array configured according to the reconfiguration information and the matched input ends of the output FIFO group, and the reconfigurable array is further configured to provide, according to the reconfiguration information, output data of one stage of computational array corresponding to a last-stage pipeline of the data path pipeline structure to the output FIFO group. The reconfigurable processor stores the input data-to-be-processed into the corresponding input FIFO group. In this embodiment, the input FIFO group is set as a cache for external data to enter the reconfigurable processor, and the output FIFO group is set as a cache of the reconfigurable processor to output data to the external, thereby matching the requirements of the algorithm for data exchange and storage between the reconfigurable processor and external system elements. A first-stage computational array is a first stage (or a first-column computational array) of cascaded computational arrays in the reconfigurable array. In a similar way, the current stage of the computational array is the current stage (or the current-column computational array) of the cascaded computational arrays in the reconfigurable array, and the last-stage computational array is the last stage (or the last-column computational array) of the cascaded computational arrays in the reconfigurable array.

Specifically, the manner of connecting the adjacent stages of the computational arrays in the reconfigurable array to form the data path pipeline structure satisfying the algorithm computation requirements includes: two computational arrays of non-adjacent stages (non-adjacent columns) are not in cross-stage connection through data paths, such that the two non-adjacent stages of the computational arrays are not directly connected to form the data path pipeline structure; there is no data path between different computation modules in the same stage of the computational array; it should be noted that if there are only two non-adjacent stages of the computational arrays, it is not possible to connect the two stages of the computational arrays to form the data path pipeline structure satisfying the computation requirements of the algorithm; in a case that there are two non-adjacent stages of the computational arrays in one reconfigurable array, it is not possible to connect, in a direct-connection manner of cross-stage data path establishment, the two stages of the computational arrays to form the data path pipeline structure; and thus, the data path pipeline structure does not allow that the two non-adjacent stages of the computational arrays are directly connected to form a data path.

Input ends of the computation modules in the first-stage computational array serve as the input ends of the reconfigurable array and are configured to be connected with the matched output ends of the input FIFO group based on the reconfiguration information, and the first-stage computational array is a first stage of the cascaded computational arrays in the reconfigurable array; input ends of the computation modules in the current stage of the computational array are configured to be connected, based on the reconfiguration information, with output ends of the computation modules on matched rows in the adjacent previous stage of computational array, and the current stage of the computational array is not the first-stage computational array in the reconfigurable array; output ends of the computation modules in the current stage of the computational array are configured to be connected, based on the reconfiguration information, with input ends of computation modules on matched rows in the adjacent next stage of the computational array, and the current stage of computational array is not the last-stage computational array in the reconfigurable array; and output ends of the computation modules in the last-stage computational array serve as the output ends of the reconfigurable array and are configured to be connected with the matched input ends of the output FIFO group based on the reconfiguration information, and the adjacent previous stage of the computational array is one level lower than the current stage of the computational array, and the adjacent next stage of the computational array is one level higher than the current stage of the computational array; and the data path is a path for data transmission. In this embodiment, the computation modules in the two adjacent stages of the computational arrays of the reconfigurable array are in serial connection according to the reconfiguration information to form the data path pipeline structure, thereby reducing internetwork path complexity, and meanwhile simply and efficiently realizing multi-stage pipeline control. On that basis, the reconfigurable array is configured to perform, according to the reconfiguration information, connection to form the multi-path data path pipeline structure, thereby satisfying number application requirements of a plurality of algorithms synchronously executed. Thus, under the effect of external configuration, in order to form the data path pipeline structure by connection, the computation modules in the same stage of computational array and non-adjacent stages of array compute units are not in data path connection, and the input ends of the computation modules in each stage of the computational array (not including the first-stage computational array) are all allowed to be configured to the output end of any computation module of the adjacent previous stage of the computational array.

In the reconfigurable processor shown in Fig. 1, connection manners of the reconfigurable array and the reconfiguration configuration unit include but not limited to direct coupling, indirect coupling or communication connection, which may be in an electrical form, or a mechanical form or other forms, so as to transmit reconfiguration information of the computation modules. In the reconfigurable array shown in Fig. 1, there are m stages of the computational arrays, and m is a positive number greater than or equal to 2; and a computation module 1_1, a computation module 1_2, ..., a computation module 1_n1 are set in a first-stage computational array, and there is no data path between these computation modules, and n1 is a positive integer greater than or equal to 1. Specific to 1_n1, "1"denotes the stage number of the first-stage computational array, "n1"denotes the row number where computation modules arranged in the first-stage computational array are located, 1_n1 comprehensively denotes the computation module arranged at the n1th row of the first-stage computational array, namely, the computation module at the first column and the n1th row of the reconfigurable array; and in this embodiment, the pipeline depth of each the computation module in the first-stage computational array where configuration data passes is the same, and as known to those of ordinary skill in the art, in a case that data is controlled to flow through one computation module in the first-stage computational array, it is determined that the computation module is connected to a first-stage pipeline of the data path pipeline structure. It needs to be explained that at least one computation module is set in each stage of the computational array.

A computation module 2_1, ..., a computation module 2_n2 are set in a second-stage computational array, there is no data path between these computation modules, but there are data paths between these computation modules and the computation modules configured to be interlinked (interconnected) in the first-stage computational array, and n2 is a number greater than or equal to 1, and n2 is not necessarily equal to n1; and specific to 2_n2, "2" denotes the stage number of the second-stage computational array, "n2" denotes the row number where the computation modules arranged in the second-stage computational array are located, and 2_n2 comprehensively denotes the computation module arranged at the n2th row of the second-stage computational array, namely, the computation module at the second column and the n2th row of the reconfigurable array shown in Fig. 1. In this embodiment, the pipeline depth of each computation module in the second-stage computational array where configuration data passes is the same, and as known to those of ordinary skill in the art, in a case that data is controlled to flow through one computation module in the second-stage computational array, it is determined that the computation module is connected to the data path, that is, the computation module is connected to a second-stage pipeline of the data path pipeline structure. Thus, as shown in Fig. 1, the second-stage computational array and the first-stage computational array are adjacently arranged in the reconfigurable array; the second-stage computational array and the first-stage computational array are adjacent two-stage cascaded structures, the second-stage computational array and the first-stage computational array are also connected to form two adjacent stages of pipelines in the data path pipeline structure, the second-stage computational array is equivalent to the next stage of computational array adjacent to the first-stage computational array, and the first-stage computational array is equivalent to the previous stage of computational array adjacent to the second-stage computational array.

A computation module m_1, ..., a computation module m_nm are set in an m^{th}-stage computational array, and nm is greater than or equal to 1, and nm is not necessarily equal to n1 or nm is not necessarily equal to n1 or n2; and specific to m_nm, "m" denotes the stage number of the m^{th}-stage computational array, "nm" denotes the row number where computation modules arranged in the m^{th}-stage computational array are located, and m_nm comprehensively denotes the computation module arranged at the nm^{th} row of the m^{th}-stage computational array, namely, the computation module at the m^{th} column and the nm^{th} row of the reconfigurable array shown in Fig. 1, and m is greater than or equal to 2, m in the embodiment shown in Fig. 1 is greater than 2, and the m^{th}-stage computational array, in terms of hardware, belongs to the last-stage computational array arranged in the reconfigurable array in a grading manner. In this embodiment, the pipeline depth of each computation module in the m^{th}-stage computational array where configuration data passes is the same, and as known to those of ordinary skill in the art, in a case that data is controlled to pass through one computation module in the m^{th}-stage computational array, it is determined that the computation module is connected to the data path, that is, the computation module is connected to an m^{th}-stage pipeline of the data path pipeline structure, such that corresponding computation modules from the first-stage computational array to the m^{th}-stage computational array are sequentially connected, based on configuration of the reconfiguration information, to form the data path pipeline structure, and the m^{th}-stage pipeline becomes the last-stage pipeline. The m^{th}-stage computational array and the first-stage computational array are not adjacently arranged in the reconfigurable array, and do not establish the data path in a cross-stage direct connection manner, but the m^{th}-stage computational array and the previous adjacent stage establish the data path so as to connect two adjacent stages of pipelines in the data path pipeline structure. It can be known from Fig. 1 that the computation modules, connected to the data path, of all the computational arrays in the reconfigurable array are connected to form the data path pipeline structure, such that all stages of pipelines of the data path pipeline structure are respectively in one-to-one correspondence with all stages of computational arrays in the reconfigurable array, and thus, in the reconfigurable array shown in Fig. 1, the pipeline depth of the data path pipeline structure is the sum of the pipeline depths of all stages of computational arrays, namely, the sum of the pipeline depths of the m stages of the computational arrays.

As an embodiment, reconfiguration information of a computation module provided by the reconfiguration configuration unit includes second configuration information, first configuration information and third configuration information, and the computation module includes a computation control unit, a compensation unit, a first interconnection unit and a second interconnection unit.

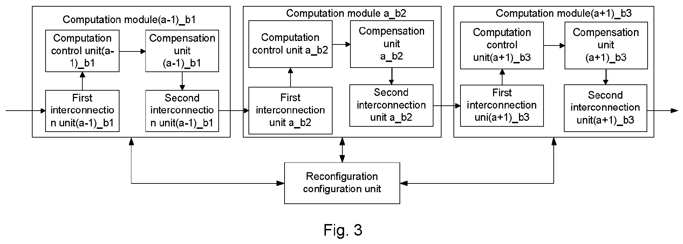

In combination with Fig. 3, in a computation module a_b2, notice that the computation module a_b2 represents a computation module at a b2^{th} row in an a^{th}-stage computational array, and a specific identification method is not repeated herein by referring to the above embodiment. Labels of subsequent computation modules and logic units divided in the computation modules are identified according to their locations in the reconfigurable array, which is not repeated herein by referring to the above embodiment. In addition, in the same computation module of the current stage of the computational array, an input end of the first interconnection unit is an input end of the computation module, an output end of the first interconnection unit is connected with an input end of the computation control unit, an output end of the computation control unit is connected with an input end of the compensation unit, an output end of the compensation unit is connected with an input end of the second interconnection unit, and an output end of the second interconnection unit is an output end of the computation module.

In combination with Fig. 3, the first interconnection unit a_b2 is configured to connect, according to the first configuration information, the first interconnection unit a_b2 and the computation control unit a_b2 to a current stage of pipeline (corresponding to an a^{th}-stage pipeline in Fig. 3) of the data path pipeline structure. In combination with Fig. 3, when the first interconnection unit (a-1)_b1 is within the first-stage computational array and is connected to a first-stage pipeline, the first interconnection unit (a-1)_b1 inputs data-to-be-computed output by a matched output end in the input FIFO group to the computation control unit (a-1)_b1. When the first interconnection unit a_b2 is not within the first-stage computational array, the first interconnection unit a_b2 inputs a computation result output by the matched computation module (a-1)_b1 in the adjacent previous stage of the computational array into the computation control unit a_b2; and in a similar way, when the first interconnection unit (a+1)_b3 is not within the first-stage computational array, the first interconnection unit (a+1)_b3 inputs a computation result output by the matched computation module a_b2 in the adjacent previous stage of the computational array into the computation control unit (a+1)_b3. It needs to be explained that in this embodiment, data, when passing through the first interconnection unit, is processed without considering the pipeline depth.

The computation control unit a_b2 is configured to be selectively connected, according to the second configuration information, to form a data through path so as to control data input into the computation control unit a_b2 to directly pass and be transmitted to the compensation unit a_b2 without being computed through enabled trigger, or is selectively connected to form a data computation path so as to control the data input into the computation control unit a_b2 to be transmitted to the compensation unit a_b2 after computation is executed; and the computation control unit (a+1)_b3 and the computation control unit (a-1)_b1 shown in Fig. 3 are both respectively selectively connected to form the data through path and the data computation path according to the second configuration information. The data path includes the data through path and the data computation path. It needs to be explained that computation types executed by the computation control unit include addition and subtraction, multiplication, division, square root extraction and trigonometric computation, and these specific computing operations are executed when the computation control unit is connected to the data computation path, and consume a certain time to generate a pipeline depth corresponding to the computing types. For example, when the computation control unit is an adder-subtractor, and is connected to form the data computation path, the pipeline depth is configured to be 1; when the computation control unit is a multiplier, and is connected to form the data computation path, the pipeline depth is configured to be 4; when the computation control unit is a divider and is connected to form the data computation path, the pipeline depth is configured to be 6; when the computation control unit is a square root calculator and is connected to form the data computation path, the pipeline depth is configured to be 4; when the computation control unit is a trigonometric function calculator and is connected to form the data computation path, the pipeline depth is configured to be 12; and when the computation control unit is connected to form the data through path, which represents direct data pass-through, the computation control unit is directly connected to the adjacent next stage of the computational array, and the pipeline depth of the computation control unit is connected to be 0. It should be noted that the computation types of the computation control units within each stage of the computational array may be either partially the same or all the same, and the computation types of the computation control units of two adjacent stages of the computational arrays may be either partially the same or all the same. In this embodiment, the computation type and the number of the computation control units within each stage of the computational array may be adjusted according to specific application fields and performance requirements. On that basis, by changing the computing manners of addition, subtraction, multiplication and division of the computation modules in the reconfigurable array, the various stages of interconnected computation control units of the reconfigurable array are applicable to multiple algorithms, accordingly, flexible configuration may be performed according to requirements of different algorithms, such that a mode that one algorithm is matched with a fixed array in a traditional computational array is changed, thereby greatly reducing computing cost and improving computing efficiency.

Optionally, the second configuration information is also a kind of gating signal and is used for controlling data transmitted by the first interconnection unit to be selectively output between the data through path and the data computation path, thereby satisfying the computation requirements of the algorithm in each stage of pipeline of the data path pipeline structure, and the computation control unit is implemented by a data selector and an arithmetic logic circuit, a gating end of the data selector receives the second configuration information, and the executable operations of the arithmetic logic circuit correspond to the addition and subtraction, multiplication, division, square root extraction and trigonometric computation in the above embodiment; and an input end of the arithmetic logic circuit is connected with a data output end of the data selector, and the data selector is configured to switch, according to the second configuration information, the output of the data transmitted by the first interconnection unit between the data through path and the data computation path, thereby satisfying the computation requirements of the algorithm in each stage of pipeline of the data path pipeline structure. Accordingly, whether the computation control unit performs a computing function at present or not is determined.

The compensation unit is configured to select, according to the third configuration information, a corresponding delay difference to perform delay compensation on the pipeline depth of the associated computation module to obtain the maximum pipeline depth allowed by the current stage of the computational array. In this embodiment, the pipeline depth of the computation control unit is added to the pipeline depth corresponding to the delay difference of the compensation unit, and the obtained sum is the maximum pipeline depth allowed by the current stage of the computational array, and the maximum pipeline depth allowed by the current stage of the computational array is the pipeline depth of the computation control unit in the current stage of pipeline of the data path pipeline structure where it takes the longest time for data to pass; thus, output data (understood as a computation result) of the computation control unit (a+1)_b3 is subject to delay processing by the compensation unit (a+1)_b3 shown in Fig. 3, and the pipeline depth of the computation module (a+1)_b3 is compensated to the maximum pipeline depth allowed by an (a+1)^{th}-stage of computational array; and in a case that transmission time calculated by the computation control unit (a+1)_b3 in the data computation path formed through connection in the (a+1)^{th}-stage of the computational array is the maximum among all the computation control units connected to form paths in the (a+1)^{th}-stage of the computational array, the delay difference generated by the compensation unit (a+1)_b3 is 0, which is equivalent to no delay compensation on the computation control unit (a+1)_b3, such that the maximum pipeline depth allowed by the (a+1)^{th}-stage of the computational array is equal to the pipeline depth of the computation control unit (a+1)_b3. In a similar way, after the maximum pipeline depth allowed by the a^{th}-stage computational array is determined, the compensation unit a_b2 also performs similar delay processing on the computation control unit a_b2; and after the maximum pipeline depth allowed by an (a-1)^{th}-stage computational array is determined, the compensation unit (a-1)_b1 also performs similar delay processing on the computation control unit (a-1)_b1.

In combination with Fig. 3, the second interconnection unit (a+1)_b3 is configured to connect, according to the first configuration information, the second interconnection unit (a+1)_b3 and the compensation unit (a+1)_b3 to an (a+1)^{th}-stage pipeline of the data path pipeline structure. In combination with Fig. 3, when the second interconnection unit (a+1)_b3 is within the last-stage (column) computational array and is connected to a last-stage pipeline, data subject to delay compensation processing by the compensation unit (a+1)_b3 is transmitted to matched output FIFO within the output FIFO group; when the second interconnection unit a_b2 is not within the last-stage computational array, the second interconnection unit a_b2 transmits data subject to delay compensation processing by the compensation unit a_b2 to the matched computation module (a+1)_b3 within the adjacent next stage of the computational array; in a similar way, when the second interconnection unit (a-1)_b1 is not within the last-stage computational array, the second interconnection unit (a-1)_b1 transmits data subject to delay compensation processing by the compensation unit (a-1)_b1 to the matched computation module a_b2 within the adjacent next stage of the computational array; and it needs to be noted that in this embodiment, data, when passing through the second interconnection unit, is processed without considering the pipeline depth.

In the above embodiment, the computation module is connected with the adjacent previous stage of the computational array through the first interconnection unit, and is connected with the adjacent next stage of the computational array through the second interconnection unit, the computation control unit and the compensation unit are connected between the first interconnection unit and the second interconnection unit, thereby forming the pipeline based on the reconfiguration information, such that the computation module is set into a reconfigurable interconnection logic mode according to adjacent columns, and a hardware structure is simple; and meanwhile, the maximum pipeline depth of the current stage of the computational array is determined on the basis that the computation module actually executing the computing function in the current stage of the computational array is determined, then, pipeline depth compensation is performed on the corresponding computation control unit by utilizing a difference between the maximum pipeline depth and the pipeline depth of the computation control unit at the same stage of the computational array, such that the pipeline depths of different computation modules of each stage of computational array through which the data passes are equal, and thus, the problems that the coarse-grained reconfigurable processor (one type of the reconfigurable processor) is not high in clock frequency and low in computing efficiency are solved.

In the above embodiment, the third configuration information is a kind of gating signal, and is used for selecting, within all computation modules of the current stage of pipeline (all computation modules connected to the data path pipeline structure at the current stage of computational array), a matched register path used for compensating for a delay difference in the compensation unit after the reconfiguration configuration unit determines the computation control unit, consuming the maximum pipeline depth, in the current stage of pipeline of the data path pipeline structure (that is, after the reconfiguration configuration unit determines the computation control unit, consuming the maximum pipeline depth, connected to the data path pipeline structure within the current stage of computational array), and then control output data of the computation control unit of the current stage of pipeline to be transmitted on the register path (control output data of different computation control units connected to the data path pipeline structure within the current stage of the computational array) until the data is output to the corresponding computation module, thereby realizing delay compensation of the pipeline depth of the computation modules of the current stage of pipeline to the maximum pipeline depth allowed by the current stage of the computational array, that is, the pipeline depth of the computation modules connected to the data path pipeline structure within the same stage of computational array is subject to delay compensation into the maximum pipeline depth allowed by the current stage of the computational array. In this implementation, the data first passes through the computation control unit with a first pipeline depth, and then is controlled to pass through the matched register path used for compensating for the delay difference, and the pipeline depth generated after the data passes through the matched register path used for compensating for the delay difference is a second pipeline depth, and thus, the pipeline depth consumed by the data is the sum of the first pipeline depth and the second pipeline depth, which is equal to the maximum pipeline depth allowed by the current stage of the computational array, such that the computation modules connected to the data path pipeline structure within the same stage of computational array synchronously output the data. The compensation unit is implemented by a selector and a register, then, pipelining compensation is selectively performed on the computation control unit not reaching the pipeline depth of the current stage of computational array, and overall pipelining of data processing of the reconfigurable array is supported on a multi-stage pipeline structure.

Optionally, the register path used for compensating for the delay difference in the compensation unit is composed of a preset number of registers, and these registers store, under the effect of triggering of the third configuration information, data output by the computation control unit within the same computation module, and when the preset number changes, delay time generated by the register path used for compensating for the delay difference also changes, leading to a different pipeline depth generated when the data passes, and thus, the matched delay difference is provided, based on the data gating function of the selector, for computation control units with different pipeline depths, which is acquired based on the pipeline depth compensation mechanism by those skilled in the art by adopting the selector and the registers for logic device combination and improvement, including but not limited to: a gating end of the selector is configured to receive the third configuration information, a plurality of data output ends of the selector are respectively connected to register paths composed of different numbers of registers, thus, there are a plurality of optional register paths within the same compensation unit, the compensation unit selects, under the gating function of the third configuration information, the computation control unit within the same computation module to connect the matched register path and then controls output data of the computation control unit to be transmitted on the register path until the output data is output to the computation module, thereby realizing delay compensation on the pipeline depths of the computation modules connected to the data path pipeline structure within the same stage of computational array to the maximum pipeline depth allowed by the current stage of the computational array. In this embodiment, the stored generated delay difference is equal to a time difference obtained by subtracting the maximum pipeline depth allowed within the current stage of the computational array from the pipeline depth of the computation control unit connected with the compensation unit within the same computation module. In this embodiment, the selector in the compensation unit is controlled based on the third configuration information to connect the computation control unit with the register path used for generating a proper delay difference, such that any data passes through, with the equal pipeline depth, different computation modules connected to the data path pipeline structure within the same stage of computational array.

Optionally, the first configuration information includes: access address information and time information required for connecting the first interconnection unit in the first-stage computational array and a matched input FIFO arranged in the input FIFO group to the data path pipeline structure, access address information and time information required for connecting the first interconnection unit in the current stage of the computational array and the matched second interconnection unit in the adjacent previous stage of the computational array to the data path pipeline structure, access address information and time information required for connecting the second interconnection unit in the current stage of the computational array and the matched first interconnection unit in the adjacent next stage of the computational array to the data path pipeline structure, and access address information and time information required for connecting the second interconnection unit in the last-stage computational array and a matched output FIFO arranged in the output FIFO group to the data path pipeline structure, and the first interconnection unit and the second interconnection unit both support formation of a topology structure for interconnection of the computation modules in the reconfigurable array or the data path pipeline structure, thereby realizing complete functions of the algorithm. In this embodiment, the data is transmitted, based on the requirements of the first configuration information, to a corresponding input end of the first-stage computational array of a multi-stage pipeline, such that the data is transmitted to a corresponding output FIFO after being operated and processed by a computational array on the multi-stage pipeline, and thus, according to different computation application requirements, when the reconfiguration configuration unit is switched from providing one kind of reconfiguration information into providing another kind of reconfiguration information, formation of a pipeline structure with complete interconnection logics between the adjacent stages of computational arrays is ensured.

As an embodiment shown in Fig. 2, the reconfigurable array has six stages of computational arrays, namely 6 columns of computational arrays. Each stage of the computational array is provided with four rows of the computation modules, that is, the four computation modules are arranged within each column of the computational array in row, there is one computation module in each row within the same stage of computational array, and the computation modules are respectively represented by an adder-subtractor, a multiplier, a divider, a square root calculator and a trigonometric function calculator shown in Fig. 2, the meanings of labels carried by these computation modules in Fig. 2 are explained by referring to "m_nm" in the embodiment of Fig. 1, that is, the label before "_" represents the column number of the computational arrays of the reconfigurable array, or the stage number of the computational arrays of the reconfigurable array, or the stage number of pipelines of the data path pipeline structure (each stage of computational array represents each stage of pipeline), and the label after "_" represents the row number of the computation modules of the reconfigurable array, namely, the row number of the computational arrays where the computation modules are distributed. In this embodiment, six stages of the computational arrays are connected to form a six-stage pipeline under the configuration of the reconfiguration information provided by the reconfiguration configuration unit, such that the data path pipeline structure is formed, and computing operation of specific granularity is supported, and there is only one computation module set in each row within the same stage of computational array. Input ends of four computation modules set in the first-stage computational array are respectively connected to output ends of four different input FIFOs within the input FIFO group based on the reconfiguration information, and an output end of one computation module set in the sixth-stage computational array is connected to an output end of one output FIFO within the output FIFO group based on the reconfiguration information.

It needs to be noted that, in Fig. 2, all the computation modules in the reconfigurable array adopt the pipelining design, and different types of computation control units in the computation modules have different pipeline depths, and the pipeline depth of the computation control unit in the adder-subtractor is 1, the pipeline depth of the computation control unit in the multiplier is 4, the pipeline depth of the computation control unit in the divider is 6,the pipeline depth of the computation control unit in the square root calculator is 4, the pipeline depth of the computation control unit in the trigonometric function calculator is 12, and when the computation control unit is chosen as a data through path for connection, which represents direct data pass-through, the pipeline depth is 0. The computation control unit in the adder-subtractor is connected to form the data computation path to execute addition computation or subtraction computation, and because the pipeline depth consumed for executing the addition computation or subtraction computation is the same, the executed addition computation or subtraction computation is commonly briefly called addition-subtraction computation.

In Fig. 2, the computation modules covered with oblique lines are used for representing that the internal computation control units are connected to form the data computation path to execute corresponding function computation; and the computation modules indicated by arrowed connecting lines and uncovered with the oblique lines are used for representing that the internal computation control units inside are connected to form the data through path to realize direct data pass-through without processing.

As shown in Fig. 2, the first-stage computational array includes an adder-subtractor 1_1, an adder-subtractor 1_2, an adder-subtractor 1_3 and an adder-subtractor 1_4, computation control units in the adder-subtractor 1_1 and the adder-subtractor 1_4 within the first-stage computational array are both connected, under configuration of second configuration information included in the reconfiguration information, to form a data computation path, which is applied to execute the addition computation and subtraction computation; computation control units in the adder-subtractor 1_2 and the adder-subtractor 1_3 within the first-stage computational array are both connected, under configuration of the second configuration information included in the reconfiguration information, to form a data through path; all the adder-subtractor 1_1, the adder-subtractor 1_4, the adder-subtractor 1_2 and the adder-subtractor 1_3 are connected to form a first-stage pipeline of the data path pipeline structure; and under configuration of the third configuration information, the pipeline depth of the first-stage pipeline to which the first-stage computational array is correspondingly connected is 1. Based on the first configuration information, the adder-subtractor 1_1 receives data transmitted by a first input FIFO and a second input FIFO of the input FIFO group, the adder-subtractor 1_2 receives data transmitted by a second input FIFO of the input FIFO group, the adder-subtractor 1_3 receives data transmitted by a third input FIFO of the input FIFO group, and the adder-subtractor 1_4 receives data transmitted by the third input FIFO and a fourth input FIFO of the input FIFO group.

The second-stage computational array includes a multiplier 2_1, a multiplier 2_2, a multiplier 2_3 and a multiplier 2_4. In the second-stage computational array, the multiplier 2_1 respectively receives, based on the first configuration information, output data of the adder-subtractor 1_2 and output data of the adder-subtractor 1_1, the multiplier 2_3 respectively inputs, based on the first configuration information, the output data of the adder-subtractor 1_2 and output data of the adder-subtractor 1_3, and then computation control units in the multiplier 2_1 and the multiplier 2_3 are connected, under configuration of the second configuration information included in the reconfiguration information, to form the data computation path which is applied to execute the multiplication computation; and in the second-stage computational array, the multiplier 2_4 respectively receives, based on the first configuration information, output data of the adder-subtractor 1_4, and then, a computation control unit in the multiplier 2_4 is connected, based on configuration of the second configuration information, to form the direct through path. In conclusion, the multiplier 2_1, the multiplier 2_3 and the multiplier 2_4 are all connected to form the second-stage pipeline of the data path pipeline structure; and under configuration of the third configuration information, the pipeline depth of the second-stage pipeline formed through corresponding connection within the second-stage computational array is 4.

A third-stage computational array includes an adder-subtractor 3_1, an adder-subtractor 3_2, an adder-subtractor 3_3 and an adder-subtractor 3_4; in the third-stage computational array, the adder-subtractor 3_1 receives, based on the first configuration information, the output data of the multiplier 2_1, the adder-subtractor 3_3 receives, based on the first configuration information, the output data of the multiplier 2_3, and the adder-subtractor 3_4 receives, based on the first configuration information, the output data of the multiplier 2_4; computation control units in the adder-subtractor 3_1, the adder-subtractor 3_3 and the adder-subtractor 3_4 are all connected, under configuration of the second configuration information included in the reconfiguration information, to form a data through path; the adder-subtractor 3_1, the adder-subtractor 3_3 and the adder-subtractor 3_4 are all connected to form a third-stage pipeline of the data path pipeline structure; and under configuration of the third configuration information, the pipeline depth of the third-stage pipeline formed through corresponding connection within the third-stage computational array is 0.

A fourth-stage computational array includes a multiplier 4_1, a multiplier 4_2, a multiplier 4_3 and a divider 4_4; in the fourth-stage computational array, the multiplier 4_2 receives, based on the first configuration information, the output data of the adder-subtractor 3_1 and the output data of the adder-subtractor 3_3, and the divider 4_4 receives, based on the first configuration information, the output data of the adder-subtractor 3_3 and the output data of the adder-subtractor 3_4; a computation control unit within the multiplier 4_2 is connected, under configuration of the second configuration information, to form the data computation path which is applied to execute the multiplication computation; a computation control unit within the divider 4_4 is connected, under configuration of the second configuration information, to form the data computation path which is applied to execute the division computation; both the multiplier 4_2 and the divider 4_4 are connected to form a fourth-stage pipeline of the data path pipeline structure; and under configuration of the third configuration information, because the pipeline depth of the computation control unit in the divider is 6 and is greater than the pipeline depth of the computation control units in the multipliers, the computation control unit within the divider consumes the maximum pipeline depth in the current stage of pipeline, and accordingly, the pipeline depth of the fourth-stage pipeline formed through corresponding connection within the fourth-stage computational array is 6.

In a similar way, a fifth-stage computational array includes an adder-subtractor 5_1, an adder-subtractor 5_2, an adder-subtractor 5_3 and an adder-subtractor 5_4; in the fifth-stage computational array, the adder-subtractor 5_2 receives, based on the first configuration information, the output data of the multiplier 4_2 and the output data of the divider 4_4; a computation control unit in the adder-subtractor 5_2 is connected, under configuration of the second configuration information, to form the data computation path which is applied to execute the addition-subtraction computation; the adder-subtractors are connected to form a fifth-stage pipeline of the data path pipeline structure; and under configuration of the third configuration information, the pipeline depth of the fifth-stage pipeline formed through corresponding connection within the fifth-stage computational array is 1.

In a similar way, a sixth-stage computational array includes a multiplier 6_1, a square root calculator 6_2, a divider 6_3 and a triangle calculator 6_4; in the sixth-stage computational array, the square root calculator 6_2 receives, based on the first configuration information, the output data of the adder-subtractor 5_2; a computation control unit in the square root calculator 6_2 is connected, under configuration of the second configuration information, to form the data computation path which is applied to execute the square root computation; the square root calculator 6_2 is connected to form a sixth-stage pipeline of the data path pipeline structure; and under configuration of the third configuration information, the pipeline depth of the sixth-stage pipeline formed through corresponding connection within the sixth-stage computational array is 4. The square root calculator 6_2 outputs, based on the first configuration information, the data to the output FIFO within the output FIFO group.

In conclusion, under configuration of the third configuration information, the pipeline depth of the data path pipeline structure, satisfying the computation requirements of the algorithm, formed through connection via the reconfigurable processor is the sum of the pipeline depths of the foregoing six stages of pipelines, and specifically is: 1+4+0+6+1+4 = 16. The reconfigurable array connected to form the multi-stage pipeline adaptively adjusts the sum of the pipeline depths to be 16 according to the current configured data path. Accordingly, the overall reconfigurable array with the multi-stage pipeline may be regarded as a complex computation module with a 16-stage pipeline depth. According to different application requirements, when the reconfigurable processor transitions from one configuration to another, the reconfigurable array may adaptively adjust the sum of pipeline depths based on the pipeline depth of each stage of computational array.

Specifically, the pipeline depth of the computation control units in the adder-subtractor 1_2 and the adder-subtractor 1_3 within the first-stage computation array is 0 based on configuration of the third configuration information, which requires control respective internal compensation units to perform one stage of pipelining compensation, that is, a first preset number of registers are used for completing one-clock cycle delay compensation for output data of the computation control units, thereby compensating the first-stage computational array for one stage of pipeline depth.

The computation control unit in the multiplier 2_4 within the second-stage computational array is connected to form the data through path, the pipeline depth of the computation control unit in the multiplier 2_4 is 0, which requires control, according to the third configuration information, the internal compensation unit to perform four stages of pipelining compensation on output data of the computation control unit in the multiplier 2_4, such that the pipeline depth of the multiplier 2_4 is subject to delay compensation to the maximum pipeline depth allowed by the second-stage computational array, namely the pipeline depth of the multiplier 2_1 or the multiplier 2_3 with the internal computation control unit connected to form the data computation path.

The pipeline depth of the computation control unit in the multiplier 4_2 within the fourth-stage computational array is 4 and is less than the pipeline depth of 6 for the divider 4_4 with the internal computation control unit connected to form the data computation path, and the pipeline depth of the divider 4_4 is configured as the maximum pipeline depth allowed by the fourth-stage computational array; and thus, the internal compensation unit is required to be controlled, according to the third configuration information, to perform two stages of pipelining compensation on the output data of the computation control unit in the multiplier 4_2, such that the pipeline depth of the multiplier 4_2 is subject to delay compensation to the maximum pipeline depth allowed by the fourth-stage computational array.

Based on the foregoing reconfigurable processor, another embodiment of the present disclosure discloses a configuration method, including: adjacent stages of computational arrays of the reconfigurable array are connected, according to computation requirements of an algorithm matched with a current application scenario, to form a data path pipeline structure which supports data to pass, with the equal pipeline depth, through different computation modules within the same stage of computational array and satisfies the computation requirements of the algorithm matched with the current application scenario; because the different computation modules connected to the data path pipeline structure within the same stage of computational array are the same in pipeline depth, the different computation modules connected to the data path pipeline structure synchronously output data; and in the data path pipeline structure, the pipeline depth of the different computation modules within the same stage of computational array is configured to be equal, and is equal to the maximum pipeline depth allowed by the same stage of computational array. Because the computation module with the relatively small pipeline depth consumes short time in executing the computing operation and is required to be delayed to wait for the computation module with the relatively large pipeline depth to execute the computing operation, in this embodiment, the maximum pipeline depth allowed by the same stage of computational array is configured to be the maximum pipeline depth of the computation module within the same stage of computational array for executing the computing operation in the pipeline or a preset multiple of the maximum pipeline depth belonging to the computation module. It is guaranteed that the different computation modules within the same stage of computational array synchronously output (parallel output) data, thereby increasing the throughput of the reconfigurable processor.

At least one computation module is set in each stage of the computational array. One computational array set on each column within the reconfigurable array is one stage of the computational array, and the number of the computational arrays is preset; each stage of pipeline of the data path pipeline structure corresponds to one stage of the computational array; the computation module connected to a data path within the current stage of the computational array is equivalent to a current stage of pipeline connected to the data path pipeline structure; and the pipeline depth is time consumed for data to flow through the corresponding data path of the data path pipeline structure. Compared with the prior art, the configuration method reconfigures, based on the adjacent interconnected computation modules for executing computing instructions, the data path pipeline structure adjusting the pipeline depth of each stage of the computational array where data passes to be equal and satisfying the computation requirements of the algorithm, such that the reconfigurable processor can configure adaptive pipeline depths according to different algorithms, and on this basis, realizes overall pipelining of data processing operation of the reconfigurable array, thereby improving the throughput of the reconfigurable processor.

The configuration method further includes: the reconfigurable array is further configured, based on reconfiguration information, to receive data-to-be-computed transmitted from the input FIFO group, and transmit the data-to-be-computed to the data path pipeline structure, and meanwhile the reconfigurable array is configured to output a computation result of a computational array corresponding to a last stage of the data path pipeline structure to the output FIFO group. According to the configuration method, external data is configured to enter a cache of the reconfigurable processor, and meanwhile a cache of the reconfigurable processor for outputting data to the external is set, thereby matching the requirements of the algorithm for data exchange and storage between the reconfigurable processor and external system elements.

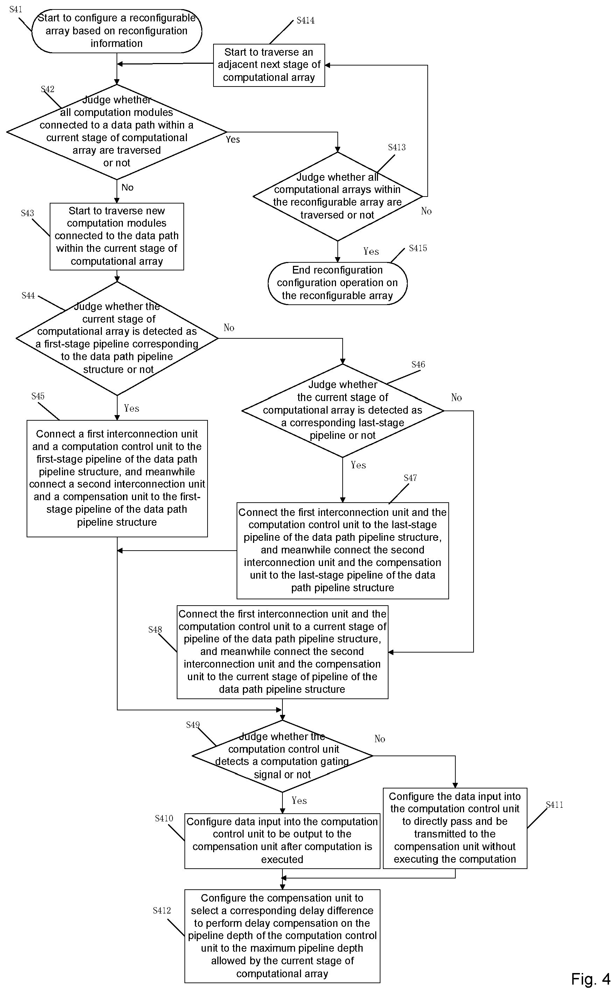

As an embodiment shown in Fig. 4, the configuration method specifically includes:
Step S41: Start to configure a reconfigurable array based on the reconfiguration information in the foregoing embodiment, and then perform step S42.
Step S42: Judge whether all computation modules connected to a data path within the current stage of the computational array are traversed or not, in a case that all computation modules connected to the data path within the current stage of the computational array are traversed, perform step S413, and in a case that all computation modules connected to the data path within the current stage of the computational array are not traversed, perform step S43. It needs to be noted that, the data path is a part of the data path pipeline structure, and serves as a unit to describe each stage of pipeline of the data path pipeline structure.
Step S43: Start to traverse new computation modules connected to the data path within the current stage of computational array, and then perform step S44.
Step S44: Judge whether the current stage of the computational array is detected as a first-stage pipeline corresponding to the data path pipeline structure or not, that is, judge whether there is a computation module connected to a data path of the first-stage pipeline within the current stage of computational array or not, in a case that there is the computation module connected to the data path of the first-stage pipeline within the current stage of computational array, perform step S45, and in a case that there is not the computation module connected to the data path of the first-stage pipeline within the current stage of computational array, perform step S46.
Step S45: Connect a first interconnection unit and a computation control unit to the first-stage pipeline of the data path pipeline structure, and meanwhile connect a second interconnection unit and a compensation unit to the first-stage pipeline of the data path pipeline structure, thereby connecting, within the first-stage computational array, to form the first-stage pipeline of the data path pipeline structure. Then, perform step S49.
Step S49: Judge whether the computation control unit detects a computation gating signal or not (corresponding to the configuration function of the third configuration information in the foregoing embodiment), in a case that the computation control unit detects the computation gating signal, perform step S410, and in a case that the computation control unit not detects the computation gating signal, perform step S411.
Step S410: Configure the data input into the computation control unit to be output to the compensation unit after the computation is executed, and then perform step S412.
Step S411: Configure the data input into the computation control unit to directly pass and be transmitted to the compensation unit without executing the computation.
Step S412: Configure the compensation unit to select a corresponding delay difference to perform delay compensation on the pipeline depth of the computation control unit to the maximum pipeline depth allowed by the current stage of the computational array, and for a specific compensation method, refer to the foregoing embodiment of the compensation unit of the reconfigurable processor. Return to step S42.
Step S46: Judge whether the current stage of computational array is detected as a corresponding last-stage pipeline or not, in a case that the current stage of computational array is detected as the corresponding last-stage pipeline, perform step S47, and in a case that the current stage of computational array is not detected as a corresponding last-stage pipeline, perform step S48.
Step S47: Connect the first interconnection unit and the computation control unit to the last-stage pipeline of the data path pipeline structure, meanwhile, connect the second interconnection unit and the compensation unit to the last-stage pipeline of the data path pipeline structure, and then perform step S49.
Step S48: Connect the first interconnection unit and the computation control unit to a current stage of pipeline of the data path pipeline structure, meanwhile, connect the second interconnection unit and the compensation unit to the current stage of pipeline of the data path pipeline structure, and then perform step S49.
Step S413: Judge whether all computational arrays within the reconfigurable array are traversed or not, in a case that all computational arrays within the reconfigurable array are traversed, perform step S415, and in a case that all computational arrays within the reconfigurable array are not traversed, perform step S414.
Step S414: Start to traverse the adjacent next stage of computational array, and then return to step S42.
Step S415: Determine that all columns (all stages) of the computational arrays within the reconfigurable array are traversed, end reconfiguration configuration operation on the reconfigurable array.

The computation module includes the computation control unit, the compensation unit, the first interconnection unit and the second interconnection unit. In the same computation module of each stage of the computational array, an input end of the first interconnection unit is an input end of the computation module, an output end of the first interconnection unit is connected with an input end of the computation control unit, an output end of the computation control unit is connected with an input end of the compensation unit, an output end of the compensation unit is connected with an input end of the second interconnection unit, and an output end of the second interconnection unit is an output end of the computation module.

In the foregoing steps, the computation module actually executing the computing function in the current stage of the computational array and the maximum pipeline depth of the current stage of the computational array can be determined, then, pipelining compensation is performed on the corresponding computation control unit by utilizing a difference between the maximum pipeline depth and the pipeline depth of the computation control unit at the same stage of computational array, such that the pipeline depths of different computation modules of each stage of the computational array through which the data passes are equal, and thus, the problems that a coarse-grained reconfigurable processor (one type of the reconfigurable processor) is not high in clock frequency and low in computing efficiency are solved. Meanwhile, by configuring connection manners of the first interconnection unit and the second interconnection unit inside and outside the computation module, the computation control unit and the compensation unit are connected to form a first-stage pipeline structure of the data path pipeline structure, thereby realizing multi-stage pipelining control.

It needs to be noted that, in the reconfigurable array, the two non-adjacent stages of the computational arrays are not in cross-stage connection through the data path, such that the two non-adjacent stages of the computational arrays are not directly connected to form the data path pipeline structure; and there is no data path between different computation modules within the same stage of computational array, and the data path is a path for data transmission. Compared with the prior art, the flexibility of the reconfigurable array is guaranteed, and meanwhile complexity of an internetwork path is simplified.

In the embodiments provided in this application, it should be understood that the disclosed system and chip may be implemented in other manners. For example, the above described system embodiments are merely illustrative, such as unit division which is merely logical function division, and during practical implementation, there may be additional division manners. For example, a plurality of units or assemblies may be combined or integrated into another system, or some characteristics may be ignored or not executed. In addition, the shown or discussed mutual coupling or direct coupling or communication connection may be implemented by some interfaces. The indirect coupling or communication connection between the apparatuses or units may be implemented in an electrical form, a mechanical form, or other forms. The units described as separate components may or may not be physically separated, and the components for unit display may or may not be physical units, and may be located in one place or may be distributed over a plurality of network units. Some or all of the units may be selected according to actual needs to achieve the objective of the solution of this embodiment.

## Claims

1. A reconfigurable processor, the reconfigurable processor comprising a reconfiguration configuration unit and a reconfigurable array,
wherein the reconfiguration configuration unit is configured to provide, according to an algorithm matched with a current application scenario, reconfiguration information used for reconfiguring a computation structure in the reconfigurable array;
the reconfigurable array comprises at least two stages of computational arrays, the reconfigurable array is configured to connect, according to the reconfiguration information provided by the reconfiguration configuration unit, adjacent two stages of the computational arrays to form a data path pipeline structure satisfying computation requirements of the algorithm matched with the current application scenario; at least one computation module is set in each stage of the computational array; in a case that at least two the computation modules are set in one stage of the computational array, pipeline depths of different computation modules connected to the data path pipeline structure are equal, such that the different computation modules connected to the data path pipeline structure synchronously output data;
only one computational array is set on each stage of the reconfigurable array, and the computational array on each column is one stage of the computational array; the number of the computational arrays in the reconfigurable array is preset, and these computational arrays exist in the reconfigurable array in the form of a cascaded structure;
each stage of pipeline of the data path pipeline structure corresponds to one stage of the computational array; in each stage of the computational array, the computation module connected to the data path pipeline structure is equivalent to a corresponding stage of the pipeline connected to the data path pipeline structure; and
the pipeline depth is time consumed for data to flow through the corresponding data path of the data path pipeline structure,
wherein the reconfigurable processor further comprises an input FIFO group and an output FIFO group;
output ends of the input FIFO group are respectively in corresponding connection with input ends of the reconfigurable array, and the reconfigurable array is configured to receive, according to the reconfiguration information, data-to-be-computed transmitted from the input FIFO group, and transmit the data-to-be-computed to the data path pipeline structure; and
input ends of the output FIFO group are respectively in corresponding connection with output ends of the reconfigurable array, and the reconfigurable array is further configured to provide, according to the reconfiguration information, output data of one stage of the computational array corresponding to a last-stage pipeline of the data path pipeline structure to the output FIFO group,
wherein connecting the adjacent two stages of the computational arrays within the reconfigurable array to form the data path pipeline structure satisfying computation requirements of the algorithm comprises:
two non-adjacent stages of the computational arrays are not in cross-stage connection through the data path, such that the two non-adjacent stages of the computational arrays are not directly connected to form the data path pipeline structure; there is no the data path between the different computation modules in the same stage of the computational array;
input ends of the computation modules in a first-stage the computational array serve as the input ends of the reconfigurable array, and are configured to be connected with the matched the output ends of the input FIFO group based on the reconfiguration information, the first-stage the computational array being a first stage of the cascaded computational arrays within the reconfigurable array;
input ends of the computation modules in a current stage of the computational array are configured to be connected, based on the reconfiguration information, with output ends of the computation modules on matched rows in an adjacent previous stage of the computational array, the current stage of the computational array being not the first-stage the computational array in the reconfigurable array;
output ends of the computation modules in the current stage of the computational array are configured to be connected, based on the reconfiguration information, with input ends of the computation modules on matched rows in an adjacent next stage of the computational array, the current stage of the computational array being not a last-stage the computational array in the reconfigurable array; and
output ends of the computation modules in the last-stage the computational array serve as the output ends of the reconfigurable array, and are configured to be connected with the matched input ends of the output FIFO group based on the reconfiguration information,
the adjacent previous stage of the computational array being one level lower than the current stage of the computational array, the adjacent next stage of the computational array being one level higher than the current stage of the computational array, and the data path being a path for data transmission,
wherein the reconfiguration information of the computation module provided by the reconfiguration configuration unit comprises: second configuration information, first configuration information and third configuration information;
the computation module comprises a computation control unit, a compensation unit, a first interconnection unit and a second interconnection unit;
the first interconnection unit is configured to connect, according to the first configuration information, the first interconnection unit and the computation control unit to a current stage of the pipeline of the data path pipeline structure, the first interconnection unit being configured to input the data-to-be-computed output by a matched output end within the input FIFO group to the computation control unit when the current stage of the pipeline corresponds to the first-stage the computational array; the first interconnection unit is further configured to input a computation result output by a matched computation module within the adjacent previous stage of computational array to the computation control unit when the current stage of the pipeline does not correspond to the first-stage the computational array;
the computation control unit is configured to be selectively connected, according to the second configuration information, to form a data through path so as to control data input into the computation control unit to directly pass and be transmitted to the compensation unit without executing computation, or be selectively connected to form a data computation path so as to control the data input into the computation control unit to be transmitted to the compensation unit after the computation is executed, the data path comprising the data through path and the data computation path;
the compensation unit is configured to select, according to the third configuration information, a corresponding delay difference to perform delay compensation on the pipeline depth of the same computation module to obtain a maximum pipeline depth allowed by the current stage of the computational array;
the second interconnection unit is configured to connect, according to the first configuration information, the second interconnection unit and the compensation unit to the current stage of the pipeline of the data path pipeline structure, the second interconnection unit being configured to transmit data subject to delay compensation processing by the compensation unit to a matched output FIFO in the output FIFO group when the current stage of the pipeline corresponds to the last-stage the computational array; the second interconnection unit is further configured to transmit the data subject to delay compensation processing by the compensation unit to a matched computation module within the adjacent next stage of the computational array when the current stage of pipeline does not correspond to the last-stage the computational array; and
in the same computation module of the current stage of the computational array, an input end of the first interconnection unit is an input end of the computation module, an output end of the first interconnection unit is connected with an input end of the computation control unit, an output end of the computation control unit is connected with an input end of the compensation unit, an output end of the compensation unit is connected with an input end of the second interconnection unit, and an output end of the second interconnection unit is an output end of the computation module.

2. The reconfigurable processor according to claim 1, wherein the third configuration information is a first gating signal, and is used for selecting, within all the computation modules of the current stage of the pipeline, a matched register path used for generating the delay difference in the compensation unit after the reconfiguration configuration unit determines the computation control unit, consuming the maximum pipeline depth, in the current stage of the pipeline of the data path pipeline structure, and then control output data of the computation control unit of the current stage of the pipeline to be transmitted on the register path until the data is output to the corresponding computation module, so as to determine: delay compensation of the pipeline depths of the computation modules of the current stage of the pipeline to the maximum pipeline depth allowed by the current stage of the computational array,
the maximum pipeline depth allowed by the current stage of the computational array being the pipeline depth of the computation control unit where it takes the longest time for data to flow through the corresponding data path of the data path pipeline structure.

3. The reconfigurable processor according to claim 2, wherein the register path used for compensating for the delay difference in the compensation unit is composed of a preset number of registers, and these registers store, under the effect of triggering of the third configuration information, data output by the computation control unit within the same computation module,
the stored generated the delay difference being equal to a time difference obtained by subtracting the maximum pipeline depth allowed within the current stage of the computational array from the pipeline depth of the computation control unit connected with the compensation unit within the same computation module.

4. The reconfigurable processor according to claim 1, wherein the first configuration information comprises:
access address information and time information required for connecting the first interconnection unit in the first-stage computational array and a matched input FIFO arranged in the input FIFO group to the data path pipeline structure,
access address information and time information required for connecting the first interconnection unit in the current stage of the computational array and the matched second interconnection unit in the adjacent previous stage of the computational array to the data path pipeline structure,
access address information and time information required for connecting the second interconnection unit in the current stage of the computational array and the matched first interconnection unit in the adjacent next stage of the computational array to the data path pipeline structure, and
access address information and time information required for connecting the second interconnection unit in the last-stage computational array and a matched output FIFO arranged in the output FIFO group to the data path pipeline structure,
the first interconnection unit and the second interconnection unit both supporting formation of a topology structure for interconnection of the computation modules in the reconfigurable array or the data path pipeline structure, so as to realize complete functions of the algorithm.

5. The reconfigurable processor according to claim 1, wherein the second configuration information is a second gating signal and is used for controlling data transmitted by the first interconnection unit to be selectively output between the data through path and the data computation path, so as to satisfy the computation requirements of the algorithm in each stage of the pipeline of the data path pipeline structure.

6. The reconfigurable processor according to any one of claims 2 to 5, wherein computation types executed by the computation control unit comprise addition and subtraction, multiplication, division, square root extraction and trigonometric computation,
the computation types of the computation control units within each stage of the computational array being either partially the same or all the same, and
the computation types of computation control units of two adjacent stages of computational arrays being either partially the same or all the same.

7. A configuration method based on a reconfigurable processor according to any one of claims 1 to 6, the configuration method comprising:
connecting, according to computation requirements of an algorithm matched with a current application scenario, adjacent stages of computational arrays of reconfigurable array to form a data path pipeline structure which supports data to pass, with the equal pipeline depth, through different computation modules within the same stage of the computational array and satisfies the computation requirements of the algorithm matched with the current application scenario,
each stage of pipeline of the data path pipeline structure corresponding to one stage of the computational array, the computation module connected to a data path within a current stage of the computational array being a current stage of the pipeline connected to the data path pipeline structure, and
the pipeline depth being time consumed for data to flow through the corresponding data path of the data path pipeline structure.

8. The configuration method according to claim 7, the configuration method further comprising: configuring the reconfigurable array to receive data-to-be-computed transmitted from an input FIFO group, and transmitting the data-to-be-computed to the data path pipeline structure, and meanwhile configuring the reconfigurable array to output a computation result of a computational array corresponding to a last stage of the data path pipeline structure to an output FIFO group, the reconfigurable processor comprises the input FIFO group and the output FIFO group.

9. The configuration method according to claim 8, wherein a specific configuration method for connecting to form the data path pipeline structure comprises:
judging, within one computation module of the current stage of the computational array, whether the current stage of the computational array is detected as a first-stage pipeline corresponding to the data path pipeline structure or not, in a case that the current stage of the computational array is detected as the first-stage pipeline corresponding to the data path pipeline structure, connecting a first interconnection unit and a computation control unit to form the first-stage pipeline of the data path pipeline structure, and configuring the first interconnection unit to input data-to-be-computed output by a matched output end within the input FIFO group to the computation control unit; in a case that the current stage of the computational array is not detected as the first-stage pipeline corresponding to the data path pipeline structure, connecting the first interconnection unit and the computation control unit to form the current stage of the pipeline of the data path pipeline structure, and configuring the first interconnection unit to input the computation result output by a matched computation module within adjacent previous stage of the computational array to the computation control unit;
judging whether the current stage of the computational array is detected as a corresponding last-stage pipeline or not, in a case that the current stage of the computational array is detected as the corresponding last-stage pipeline, connecting a second interconnection unit and a compensation unit to form the last-stage pipeline of the data path pipeline structure, and configuring the second interconnection unit to transmit data subject to delay compensation processing by the compensation unit to a matched output FIFO within the output FIFO group; and in a case that the current stage of the computational array is not detected as the corresponding last-stage pipeline, connecting the second interconnection unit and the compensation unit to form the current stage of the pipeline of the data path pipeline structure, and configuring the second interconnection unit to transmit the data subject to delay compensation processing by the compensation unit to a matched computation module within adjacent next stage of the computational array;
judging whether the computation control unit detects a computation gating signal or not, in a case that the computation control unit detects the computation gating signal, configuring data, input into the computation control unit, to be output to the compensation unit after computation is executed, and in a case that the computation control unit not detects the computation gating signal, configuring the data, input into the computation control unit, to directly pass and be transmitted to the compensation unit without executing the computation, the computation gating signal is used for controlling data transmitted by the first interconnection unit to be selectively output between the data through path and the data computation path, so as to satisfy the computation requirements of the algorithm in each stage of the pipeline of the data path pipeline structure;
and then, configuring the compensation unit to select a corresponding delay difference to perform delay processing on the output data of the computation control unit within the same computation module, so as to perform delay compensation on the pipeline depth of the same computation module to the maximum pipeline depth allowed by the current stage of the computational array, the maximum pipeline depth allowed by the current stage of the computational array being the pipeline depth of the computation control unit where it takes the longest time for data to flow through the data path within the current stage of computational array, the computation module comprises the computation control unit, the compensation unit, the first interconnection unit and the second interconnection unit, in the same computation module of each stage of the computational array, an input end of the first interconnection unit being an input end of the computation module, an output end of the first interconnection unit being connected with an input end of the computation control unit, an output end of the computation control unit being connected with an input end of the compensation unit, an output end of the compensation unit being connected with an input end of the second interconnection unit, and an output end of the second interconnection unit being an output end of the computation module.

10. The configuration method according to claim 9, wherein in the reconfigurable array, two non-adjacent stages of computational arrays are not in cross-stage connection through the data path, such that the two non-adjacent stages of computational arrays are not directly connected to form the data path pipeline structure; and there is no data path between different computation modules within the same stage of computational array, the data path being a path for data transmission.

## Patentansprüche

1. Rekonfigurierbarer Prozessor, wobei der rekonfigurierbare Prozessor eine Rekonfigurationseinheit und ein rekonfigurierbares Array umfasst,
wobei die Rekonfigurationseinheit so konfiguriert ist, dass sie gemäß einem auf ein aktuelles Anwendungsszenario abgestimmten Algorithmus Rekonfigurationsinformationen bereitstellt, die zum Rekonfigurieren einer Berechnungsstruktur im rekonfigurierbaren Array verwendet werden;
wobei das rekonfigurierbare Array mindestens zwei Stufen von Rechen-Arrays umfasst und so konfiguriert ist, dass es gemäß den von der Rekonfigurationseinheit bereitgestellten Rekonfigurationsinformationen zwei benachbarte Stufen der Rechen-Arrays verbindet, um eine Datenpfad-Pipeline-Struktur zu bilden, die die Berechnungsanforderungen des auf das aktuelle Anwendungsszenario abgestimmten Algorithmus erfüllt; in jeder Stufe des Rechen-Arrays mindestens ein Berechnungsmodul eingestellt ist; in dem Fall, dass mindestens zwei Berechnungsmodule in einer Stufe des Rechen-Arrays eingestellt sind, die Pipeline-Tiefen verschiedener mit der Datenpfad-Pipeline-Struktur verbundener Berechnungsmodule gleich sind, sodass die verschiedenen mit der Datenpfad-Pipeline-Struktur verbundenen Berechnungsmodule synchron Daten ausgeben;
wobei auf jeder Stufe des rekonfigurierbaren Arrays nur ein Rechen-Array eingestellt ist und das Rechen-Array in jeder Spalte eine Stufe des Rechen-Arrays ist; die Anzahl der Rechen-Arrays im rekonfigurierbaren Array voreingestellt ist und diese Rechen-Arrays im rekonfigurierbaren Array in Form einer kaskadierten Struktur vorhanden sind;
wobei jede Pipeline-Stufe der Datenpfad-Pipeline-Struktur einer Stufe des Rechen-Arrays entspricht; in jeder Stufe des Rechen-Arrays ist das mit der Datenpfad-Pipeline-Struktur verbundene Rechenmodul äquivalent zu einer entsprechenden Stufe der Pipeline, die mit der Datenpfad-Pipeline-Struktur verbunden ist; und
wobei die Pipeline-Tiefe die Zeit ist, die die Daten benötigen, um durch den entsprechenden Datenpfad der Datenpfad-Pipeline-Struktur zu fließen,
wobei der rekonfigurierbare Prozessor ferner eine Eingangs-FIFO-Gruppe und eine Ausgangs-FIFO-Gruppe umfasst;
wobei die Ausgangsenden der Eingangs-FIFO-Gruppe jeweils in entsprechender Verbindung mit den Eingangsenden des rekonfigurierbaren Arrays stehen und das rekonfigurierbare Array so konfiguriert ist, dass es gemäß den Rekonfigurationsinformationen zu berechnende Daten empfängt, die von der Eingangs-FIFO-Gruppe übertragen werden, und die zu berechnenden Daten an die Datenpfad-Pipeline-Struktur überträgt; und
wobei die Eingangsenden der Ausgangs-FIFO-Gruppe jeweils in entsprechender Verbindung mit den Ausgangsenden des rekonfigurierbaren Arrays stehen und das rekonfigurierbare Array ferner so konfiguriert ist, dass es gemäß den Rekonfigurationsinformationen Ausgangsdaten einer Stufe des Rechen-Arrays, die einer Pipeline der letzten Stufe der Datenpfad-Pipeline-Struktur entspricht, an die Ausgangs-FIFO-Gruppe liefert,
wobei das Verbinden der benachbarten zwei Stufen der Rechen-Arrays innerhalb des rekonfigurierbaren Arrays zum Bilden der Datenpfad-Pipeline-Struktur, die die Rechenanforderungen des Algorithmus erfüllt, Folgendes umfasst:
wobei zwei nicht benachbarte Stufen der Rechen-Arrays nicht über den Datenpfad stufenübergreifend verbunden sind, sodass die beiden nicht benachbarten Stufen der Rechen-Arrays nicht direkt verbunden sind, um die Datenpfad-Pipeline-Struktur zu bilden; es gibt keinen Datenpfad zwischen den verschiedenen Rechenmodulen in derselben Stufe des Rechen-Arrays;
wobei Eingangsenden der Berechnungsmodule in einer ersten Stufe des Berechnungs-Arrays als Eingangsenden des rekonfigurierbaren Arrays dienen und so konfiguriert sind, dass sie auf der Grundlage der Rekonfigurationsinformationen mit den entsprechenden Ausgangsenden der Eingangs-FIFO-Gruppe verbunden werden, wobei das Berechnungs-Array der ersten Stufe eine erste Stufe der kaskadierten Berechnungs-Arrays innerhalb des rekonfigurierbaren Arrays ist;
wobei Eingangsenden der Berechnungsmodule in einer aktuellen Stufe des Berechnungs-Arrays so konfiguriert sind, dass sie basierend auf den Rekonfigurationsinformationen mit Ausgangsenden der Berechnungsmodule in übereinstimmenden Zeilen in einer benachbarten vorherigen Stufe des Berechnungs-Arrays verbunden werden, wobei die aktuelle Stufe des Berechnungs-Arrays nicht die erste Stufe des Berechnungs-Arrays im rekonfigurierbaren Array ist;
wobei Ausgangsenden der Rechenmodule in der aktuellen Stufe des Rechen-Arrays so konfiguriert sind, dass sie basierend auf den Rekonfigurationsinformationen mit Eingangsenden der Rechenmodule in übereinstimmenden Zeilen in einer benachbarten nächsten Stufe des Rechen-Arrays verbunden werden, wobei die aktuelle Stufe des Rechen-Arrays nicht die letzte Stufe des Rechen-Arrays im rekonfigurierbaren Array ist; und
wobei die Ausgangsenden der Rechenmodule in der letzten Stufe des Rechen-Arrays als Ausgangsenden des rekonfigurierbaren Arrays dienen und so konfiguriert sind, dass sie auf der Grundlage der Rekonfigurationsinformationen mit den entsprechenden Eingangsenden der Ausgangs-FIFO-Gruppe verbunden werden,
wobei die benachbarte vorherige Stufe des Rechen-Arrays eine Ebene niedriger ist als die aktuelle Stufe des Rechen-Arrays, die benachbarte nächste Stufe des Rechen-Arrays eine Ebene höher ist als die aktuelle Stufe des Rechen-Arrays und der Datenpfad ein Pfad zur Datenübertragung ist,
wobei die von der Rekonfigurationseinheit bereitgestellten Rekonfigurationsinformationen des Berechnungsmoduls Folgendes umfassen: zweite Konfigurationsinformationen, erste Konfigurationsinformationen und dritte Konfigurationsinformationen;
wobei das Berechnungsmodul eine Berechnungssteuereinheit, eine Kompensationseinheit, eine erste Verbindungseinheit und eine zweite Verbindungseinheit umfasst;
wobei die erste Verbindungseinheit so konfiguriert ist, dass sie gemäß den ersten Konfigurationsinformationen die erste Verbindungseinheit und die Berechnungssteuereinheit mit einer aktuellen Stufe der Pipeline der Datenpfad-Pipeline-Struktur verbindet,
wobei die erste Verbindungseinheit so konfiguriert ist, dass sie die von einem übereinstimmenden Ausgabeende innerhalb der Eingabe-FIFO-Gruppe ausgegebenen zu berechnenden Daten in die Berechnungssteuereinheit eingibt, wenn die aktuelle Stufe der Pipeline der ersten Stufe des Berechnungs-Arrays entspricht; wobei die erste Verbindungseinheit ferner so konfiguriert ist, dass sie ein von einem übereinstimmenden Berechnungsmodul innerhalb der benachbarten vorherigen Stufe des Berechnungs-Arrays ausgegebenes Berechnungsergebnis in die Berechnungssteuereinheit eingibt, wenn die aktuelle Stufe der Pipeline nicht der ersten Stufe des Berechnungs-Arrays entspricht;
wobei die Berechnungssteuereinheit so konfiguriert ist, dass sie gemäß den zweiten Konfigurationsinformationen selektiv verbunden wird, um einen Datendurchgangspfad zu bilden, um so zu steuern, dass in die Berechnungssteuereinheit eingegebene Daten direkt an die Kompensationseinheit weitergeleitet und übertragen werden, ohne dass eine Berechnung ausgeführt wird, oder selektiv verbunden wird, um einen Datenberechnungspfad zu bilden, um so zu steuern, dass die in die Berechnungssteuereinheit eingegebenen Daten nach Ausführung der Berechnung an die Kompensationseinheit übertragen werden, wobei der Datenpfad den Datendurchgangspfad und den Datenberechnungspfad umfasst;
wobei die Kompensationseinheit dazu konfiguriert ist, gemäß den dritten Konfigurationsinformationen eine entsprechende Verzögerungsdifferenz auszuwählen, um eine Verzögerungskompensation an der Pipeline-Tiefe desselben Berechnungsmoduls durchzuführen, um eine maximale Pipeline-Tiefe zu erhalten, die von der aktuellen Stufe des Berechnungs-Arrays zugelassen wird;
wobei die zweite Verbindungseinheit so konfiguriert ist, dass sie gemäß den ersten Konfigurationsinformationen die zweite Verbindungseinheit und die Kompensationseinheit mit der aktuellen Stufe der Pipeline der Datenpfad-Pipeline-Struktur verbindet, wobei die zweite Verbindungseinheit so konfiguriert ist, dass sie Daten, die einer Verzögerungskompensationsverarbeitung durch die Kompensationseinheit unterliegen, an ein passendes Ausgabe-FIFO in der Ausgabe-FIFO-Gruppe überträgt, wenn die aktuelle Stufe der Pipeline der letzten Stufe des Berechnungs-Arrays entspricht; wobei die zweite Verbindungseinheit ferner so konfiguriert ist, dass sie die Daten, die einer Verzögerungskompensationsverarbeitung durch die Kompensationseinheit unterliegen, an ein passendes Berechnungsmodul innerhalb der benachbarten nächsten Stufe des Berechnungs-Arrays überträgt, wenn die aktuelle Stufe der Pipeline nicht der letzten Stufe des Berechnungs-Arrays entspricht; und
wobei im selben Berechnungsmodul der aktuellen Stufe des Berechnungs-Arrays ein Eingangsende der ersten Verbindungseinheit ein Eingangsende des Berechnungsmoduls ist, ein Ausgangsende der ersten Verbindungseinheit mit einem Eingangsende der Berechnungssteuereinheit verbunden ist, ein Ausgangsende der Berechnungssteuereinheit mit einem Eingangsende der Kompensationseinheit verbunden ist, ein Ausgangsende der Kompensationseinheit mit einem Eingangsende der zweiten Verbindungseinheit verbunden ist und ein Ausgangsende der zweiten Verbindungseinheit ein Ausgangsende des Berechnungsmoduls ist.

2. Rekonfigurierbarer Prozessor nach Anspruch 1, wobei die dritte Konfigurationsinformation ein erstes Gating-Signal ist und dazu dient, innerhalb aller Berechnungsmodule der aktuellen Stufe der Pipeline einen passenden Registerpfad auszuwählen, der zum Erzeugen der Verzögerungsdifferenz in der Kompensationseinheit verwendet wird, nachdem die Rekonfigurationseinheit die Berechnungssteuereinheit bestimmt hat, die die maximale Pipeline-Tiefe in der aktuellen Stufe der Pipeline der Datenpfad-Pipeline-Struktur verbraucht, und dann Ausgabedaten der Berechnungssteuereinheit der aktuellen Stufe der Pipeline so steuert, dass sie auf dem Registerpfad übertragen werden, bis die Daten an das entsprechende Berechnungsmodul ausgegeben werden, um Folgendes zu bestimmen: Verzögerungskompensation der Pipeline-Tiefen der Berechnungsmodule der aktuellen Stufe der Pipeline auf die von der aktuellen Stufe des Berechnungs-Arrays maximal zugelassene Pipeline-Tiefe,
wobei die von der aktuellen Stufe des Rechen-Arrays maximal zugelassene Pipeline-Tiefe die Pipeline-Tiefe der Berechnungssteuereinheit ist, bei der es am längsten dauert, bis die Daten durch den entsprechenden Datenpfad der Datenpfad-Pipeline-Struktur fließen.

3. Rekonfigurierbarer Prozessor nach Anspruch 2, wobei der Registerpfad, der zum Kompensieren der Verzögerungsdifferenz in der Kompensationseinheit verwendet wird, aus einer voreingestellten Anzahl von Registern besteht und diese Register unter der Wirkung der Auslösung der dritten Konfigurationsinformation Daten speichern, die von der Berechnungssteuereinheit innerhalb desselben Berechnungsmoduls ausgegeben werden,
wobei die gespeicherte Verzögerungsdifferenz gleich einer Zeitdifferenz ist, die durch Subtrahieren der maximal zulässigen Pipeline-Tiefe innerhalb der aktuellen Stufe des Berechnungs-Arrays von der Pipeline-Tiefe der Berechnungssteuereinheit, die mit der Kompensationseinheit innerhalb desselben Berechnungsmoduls verbunden ist, erhalten wird.

4. Rekonfigurierbarer Prozessor nach Anspruch 1, wobei die ersten Konfigurationsinformationen Folgendes umfassen:
Zugriff auf Adressinformationen und Zeitinformationen, die zum Verbinden der ersten Verbindungseinheit im Rechenfeld der ersten Stufe und eines in der Eingangs-FIFO-Gruppe angeordneten passenden Eingangs-FIFOs mit der Datenpfad-Pipeline-Struktur erforderlich sind,
Zugriff auf Adressinformationen und Zeitinformationen, die zum Verbinden der ersten Verbindungseinheit in der aktuellen Stufe des Rechen-Arrays und der dazu passenden zweiten Verbindungseinheit in der benachbarten vorherigen Stufe des Rechen-Arrays mit der Datenpfad-Pipeline-Struktur erforderlich sind,
Zugriff auf Adressinformationen und Zeitinformationen, die zum Verbinden der zweiten Verbindungseinheit in der aktuellen Stufe des Rechen-Arrays und der passenden ersten Verbindungseinheit in der benachbarten nächsten Stufe des Rechen-Arrays mit der Datenpfad-Pipeline-Struktur erforderlich sind, und
Zugriff auf Adressinformationen und Zeitinformationen, die zum Verbinden der zweiten Verbindungseinheit im Rechenfeld der letzten Stufe und eines in der Ausgabe-FIFO-Gruppe angeordneten angepassten Ausgabe-FIFOs mit der Datenpfad-Pipeline-Struktur erforderlich sind,
die erste Verbindungseinheit und die zweite Verbindungseinheit unterstützen beide die Bildung einer Topologiestruktur zur Verbindung der Berechnungsmodule im rekonfigurierbaren Array oder der Datenpfad-Pipeline-Struktur, um vollständige Funktionen des Algorithmus zu realisieren.

5. Rekonfigurierbarer Prozessor nach Anspruch 1, wobei die zweiten Konfigurationsinformationen ein zweites Gating-Signal sind und zum Steuern der von der ersten Verbindungseinheit übertragenen Daten verwendet werden, um diese selektiv zwischen dem Datendurchgangspfad und dem Datenberechnungspfad auszugeben, um so die Berechnungsanforderungen des Algorithmus in jeder Stufe der Pipeline der Datenpfad-Pipeline-Struktur zu erfüllen.

6. Rekonfigurierbarer Prozessor nach einem der Ansprüche 2 bis 5, wobei die von der Berechnungssteuereinheit ausgeführten Rechenarten Addition und Subtraktion, Multiplikation, Division, Wurzelziehen und trigonometrische Berechnungen umfassen,
wobei die Berechnungstypen der Berechnungssteuereinheiten innerhalb jeder Stufe des Berechnungs-Arrays entweder teilweise oder alle gleich sind, und
wobei die Berechnungstypen der Berechnungssteuereinheiten zweier benachbarter Stufen von Berechnungs-Arrays entweder teilweise oder alle gleich sind.

7. Konfigurationsverfahren basierend auf einem rekonfigurierbaren Prozessor nach einem der Ansprüche 1 bis 6, wobei das Konfigurationsverfahren Folgendes umfasst:
Verbinden benachbarter Stufen von Rechen-Arrays eines rekonfigurierbaren Arrays entsprechend den Rechenanforderungen eines auf ein aktuelles Anwendungsszenario abgestimmten Algorithmus, um eine Datenpfad-Pipeline-Struktur zu bilden, die es unterstützt, dass Daten mit gleicher Pipeline-Tiefe durch verschiedene Rechenmodule innerhalb derselben Stufe des Rechen-Arrays geleitet werden und die Rechenanforderungen des auf das aktuelle Anwendungsszenario abgestimmten Algorithmus erfüllt,
wobei jede Pipeline-Stufe der Datenpfad-Pipeline-Struktur einer Stufe des Rechen-Arrays entspricht,
wobei das mit einem Datenpfad innerhalb einer aktuellen Stufe des Rechen-Arrays verbundene Rechenmodul eine aktuelle Stufe der Pipeline ist, die mit der Datenpfad-Pipeline-Struktur verbunden ist, und
wobei die Pipeline-Tiefe die Zeit ist, die die Daten benötigen, um durch den entsprechenden Datenpfad der Datenpfad-Pipeline-Struktur zu fließen.

8. Konfigurationsverfahren nach Anspruch 7, wobei das Konfigurationsverfahren ferner Folgendes umfasst:
Konfigurieren des rekonfigurierbaren Arrays zum Empfangen von zu berechnenden Daten, die von einer Eingangs-FIFO-Gruppe übertragen werden, und Übertragen der zu berechnenden Daten an die Datenpfad-Pipeline-Struktur, und gleichzeitig Konfigurieren des rekonfigurierbaren Arrays zum Ausgeben eines Berechnungsergebnisses eines Berechnungs-Arrays, das einer letzten Stufe der Datenpfad-Pipeline-Struktur entspricht, an eine Ausgangs-FIFO-Gruppe, wobei der rekonfigurierbare Prozessor die Eingangs-FIFO-Gruppe und die Ausgangs-FIFO-Gruppe umfasst.

9. Konfigurationsverfahren nach Anspruch 8, wobei ein spezifisches Konfigurationsverfahren zum Verbinden zur Bildung der Datenpfad-Pipeline-Struktur Folgendes umfasst:
Beurteilen innerhalb eines Berechnungsmoduls der aktuellen Stufe des Berechnungs-Arrays, ob die aktuelle Stufe des Berechnungs-Arrays als eine Pipeline der ersten Stufe erkannt wird, die der Datenpfad-Pipeline-Struktur entspricht oder nicht, in einem Fall, dass die aktuelle Stufe des Berechnungs-Arrays als die Pipeline der ersten Stufe erkannt wird, die der Datenpfad-Pipeline-Struktur entspricht, Verbinden einer ersten Verbindungseinheit und einer Berechnungssteuereinheit, um die Pipeline der ersten Stufe der Datenpfad-Pipeline-Struktur zu bilden, und Konfigurieren der ersten Verbindungseinheit, um zu berechnende Daten, die von einem übereinstimmenden Ausgabeende innerhalb der Eingabe-FIFO-Gruppe ausgegeben werden, an die Berechnungssteuereinheit einzugeben; in einem Fall, dass die aktuelle Stufe des Berechnungs-Arrays nicht als die der Datenpfad-Pipeline-Struktur entsprechende Pipeline der ersten Stufe erkannt wird, Verbinden der ersten Verbindungseinheit und der BerechnungsSteuereinheit, um die aktuelle Stufe der Pipeline der Datenpfad-Pipeline-Struktur zu bilden, und Konfigurieren der ersten Verbindungseinheit, um das von einem passenden Berechnungsmodul innerhalb der benachbarten vorherigen Stufe des Berechnungs-Arrays ausgegebene Berechnungsergebnis in die BerechnungsSteuereinheit einzugeben;
Beurteilen, ob die aktuelle Stufe des Berechnungs-Arrays als entsprechende Pipeline der letzten Stufe erkannt wird oder nicht, in einem Fall, dass die aktuelle Stufe des Berechnungs-Arrays als die entsprechende Pipeline der letzten Stufe erkannt wird, Verbinden einer zweiten Verbindungseinheit und einer Kompensationseinheit, um die Pipeline der letzten Stufe der Datenpfad-Pipeline-Struktur zu bilden, und Konfigurieren der zweiten Verbindungseinheit, um Daten, die einer Verzögerungskompensationsverarbeitung durch die Kompensationseinheit unterliegen, an ein angepasstes Ausgabe-FIFO innerhalb der Ausgabe-FIFO-Gruppe zu übertragen; und in einem Fall, dass die aktuelle Stufe des Berechnungs-Arrays nicht als die entsprechende Pipeline der letzten Stufe erkannt wird, Verbinden der zweiten Verbindungseinheit und der Kompensationseinheit, um die aktuelle Stufe der Pipeline der Datenpfad-Pipeline-Struktur zu bilden, und Konfigurieren der zweiten Verbindungseinheit, um die Daten, die einer Verzögerungskompensationsverarbeitung durch die Kompensationseinheit unterliegen, an ein passendes Berechnungsmodul innerhalb der benachbarten nächsten Stufe des Berechnungs-Arrays zu übertragen;
Beurteilen, ob die Berechnungssteuereinheit ein Berechnungs-Torsignal erkennt oder nicht, in einem Fall, dass die Berechnungssteuereinheit das Berechnungs-Torsignal erkennt, Konfigurieren von in die Berechnungssteuereinheit eingegebenen Daten zur Ausgabe an die Kompensationseinheit nach Ausführung der Berechnung, und in einem Fall, in dem die Berechnungssteuereinheit das Berechnungs-Gating-Signal nicht erkennt, werden die in die Berechnungssteuereinheit eingegebenen Daten so konfiguriert, dass sie direkt an die Kompensationseinheit weitergeleitet und übertragen werden, ohne dass eine Berechnung ausgeführt wird. Das Berechnungs-Gating-Signal wird verwendet, um die von der ersten Verbindungseinheit übertragenen Daten so zu steuern, dass sie selektiv zwischen dem Datendurchgangspfad und dem Datenberechnungspfad ausgegeben werden, um so die Berechnungsanforderungen des Algorithmus in jeder Stufe der Pipeline der Datenpfad-Pipeline-Struktur zu erfüllen;
und dann Konfigurieren der Kompensationseinheit, um eine entsprechende Verzögerungsdifferenz auszuwählen, um eine Verzögerungsverarbeitung an den Ausgabedaten der Berechnungssteuereinheit innerhalb desselben Berechnungsmoduls durchzuführen, um so eine Verzögerungskompensation an der Pipeline-Tiefe desselben Berechnungsmoduls auf die maximale Pipeline-Tiefe durchzuführen, die von der aktuellen Stufe des Berechnungs-Arrays zugelassen wird, wobei die von der aktuellen Stufe des Rechen-Arrays zugelassene maximale Pipeline-Tiefe die Pipeline-Tiefe der Berechnungssteuereinheit ist, bei der es am längsten dauert, bis Daten durch den Datenpfad innerhalb der aktuellen Stufe des Rechen-Arrays fließen, das Rechenmodul die Berechnungssteuereinheit, die Kompensationseinheit, die erste Verbindungseinheit und die zweite Verbindungseinheit im selben Rechenmodul jeder Stufe des Rechen-Arrays umfasst, ein Eingangsende der ersten Verbindungseinheit ein Eingangsende des Rechenmoduls ist, ein Ausgangsende der ersten Verbindungseinheit mit einem Eingangsende der Berechnungssteuereinheit verbunden ist, ein Ausgangsende der Berechnungssteuereinheit mit einem Eingangsende der Kompensationseinheit verbunden ist, ein Ausgangsende der Kompensationseinheit mit einem Eingangsende der zweiten Verbindungseinheit verbunden ist und ein Ausgangsende der zweiten Verbindungseinheit ein Ausgangsende des Rechenmoduls ist.

10. Konfigurationsverfahren nach Anspruch 9, wobei in dem rekonfigurierbaren Array zwei nicht benachbarte Stufen von Rechen-Arrays nicht über den Datenpfad stufenübergreifend verbunden sind, sodass die beiden nicht benachbarten Stufen von Rechen-Arrays nicht direkt verbunden sind, um die Datenpfad-Pipeline-Struktur zu bilden; und es keinen Datenpfad zwischen verschiedenen Rechenmodulen innerhalb derselben Stufe des Rechen-Arrays gibt, wobei der Datenpfad ein Pfad zur Datenübertragung ist.

## Revendications

1. Processeur reconfigurable, le processeur reconfigurable comprenant une unité de configuration de reconfiguration et un réseau reconfigurable,
dans lequel l'unité de configuration de reconfiguration est configurée pour fournir, selon un algorithme mis en correspondance avec un scénario d'application actuel, des informations de reconfiguration utilisées pour reconfigurer une structure de calcul dans le réseau reconfigurable ;
le réseau reconfigurable comprend au moins deux étages de réseaux de calcul, le réseau reconfigurable est configuré pour connecter, selon les informations de reconfiguration fournies par l'unité de configuration de reconfiguration, deux étages adjacents des réseaux de calcul pour former une structure de pipeline de chemin de données satisfaisant aux exigences de calcul de l'algorithme mis en correspondance avec le scénario d'application actuel ; au moins un module de calcul est défini à chaque étage du réseau de calcul ; dans un cas où au moins deux modules de calcul sont définis dans un étage du réseau de calcul, des profondeurs de pipeline de différents modules de calcul connectés à la structure de pipeline de chemin de données sont égales, de sorte que les différents modules de calcul connectés à la structure de pipeline de chemin de données délivrent des données de manière synchrone ;
seul un réseau de calcul est défini sur chaque étage du réseau reconfigurable, et le réseau de calcul sur chaque colonne est un étage du réseau de calcul ; le nombre de réseaux de calcul dans le réseau reconfigurable est prédéfini, et ces réseaux de calcul existent dans le réseau reconfigurable sous la forme d'une structure en cascade ;
chaque étage du pipeline de la structure de pipeline de chemin de données correspond à un étage du réseau de calcul ; à chaque étage du réseau de calcul, le module de calcul connecté à la structure de pipeline de chemin de données est équivalent à un étage correspondant du pipeline connecté à la structure de pipeline de chemin de données ; et
la profondeur de pipeline est le temps consommé par les données pour circuler à travers le chemin de données correspondant de la structure de pipeline de chemin de données,
dans lequel le processeur reconfigurable comprend en outre un groupe FIFO d'entrée et un groupe FIFO de sortie ; des extrémités de sortie du groupe FIFO d'entrée sont respectivement en connexion correspondante avec des extrémités d'entrée du réseau reconfigurable, et le réseau reconfigurable est configuré pour recevoir, selon les informations de reconfiguration, des données à calculer transmises à partir du groupe FIFO d'entrée, et transmettre les données à calculer à la structure de pipeline de chemin de données ; et
des extrémités d'entrée du groupe FIFO de sortie sont respectivement en connexion correspondante avec des extrémités de sortie du réseau reconfigurable, et le réseau reconfigurable est en outre configuré pour fournir, selon les informations de reconfiguration, des données de sortie d'un étage du réseau de calcul correspondant à un pipeline de dernier étage de la structure de pipeline de chemin de données au groupe FIFO de sortie,
dans lequel la connexion des deux étages adjacents des réseaux de calcul au sein du réseau reconfigurable pour former la structure de pipeline de chemin de données satisfaisant aux exigences de calcul de l'algorithme comprend :
deux étages non adjacents des réseaux de calcul ne sont pas en connexion inter-étages à travers le chemin de données, de sorte que les deux étages non adjacents des réseaux de calcul ne sont pas directement connectés pour former la structure de pipeline de chemin de données ;
il n'y a pas de chemin de données entre les différents modules de calcul dans le même étage du réseau de calcul ;
des extrémités d'entrée des modules de calcul dans un premier étage du réseau de calcul servent d'extrémités d'entrée du réseau reconfigurable et sont configurées pour être connectées aux extrémités de sortie mises en correspondance du groupe FIFO d'entrée sur la base des informations de reconfiguration, le premier étage du réseau de calcul étant un premier étage des réseaux de calcul en cascade au sein du réseau reconfigurable ;
des extrémités d'entrée des modules de calcul dans un étage actuel du réseau de calcul sont configurées pour être connectées, sur la base des informations de reconfiguration, à des extrémités de sortie des modules de calcul sur des lignes mises en correspondance dans un étage précédent adjacent du réseau de calcul, l'étage actuel du réseau de calcul n'étant pas le premier étage du réseau de calcul dans le réseau reconfigurable ;
des extrémités de sortie des modules de calcul dans l'étage actuel du réseau de calcul sont configurées pour être connectées, sur la base des informations de reconfiguration, à des extrémités d'entrée des modules de calcul sur des lignes mises en correspondance dans un étage suivant adjacent du réseau de calcul, l'étage actuel du réseau de calcul n'étant pas un dernier étage du réseau de calcul dans le réseau reconfigurable ; et
des extrémités de sortie des modules de calcul dans le dernier étage du réseau de calcul servent d'extrémités de sortie du réseau reconfigurable et sont configurées pour être connectées aux extrémités d'entrée mises en correspondance du groupe FIFO de sortie sur la base des informations de reconfiguration,
l'étage précédent adjacent du réseau de calcul étant un niveau inférieur à l'étage actuel du réseau de calcul, l'étage suivant adjacent du réseau de calcul étant un niveau supérieur à l'étage actuel du réseau de calcul, et le chemin de données étant un chemin pour une transmission de données,
dans lequel les informations de reconfiguration du module de calcul fournies par l'unité de configuration de reconfiguration comprennent : des deuxièmes informations de configuration, des premières informations de configuration et des troisièmes informations de configuration ;
le module de calcul comprend une unité de commande de calcul, une unité de compensation, une première unité d'interconnexion et une seconde unité d'interconnexion ;
la première unité d'interconnexion est configurée pour connecter, selon les premières informations de configuration, la première unité d'interconnexion et l'unité de commande de calcul à un étage actuel du pipeline de la structure de pipeline de chemin de données, la première unité d'interconnexion étant configurée pour entrer les données à calculer délivrées par une extrémité de sortie mise en correspondance au sein du groupe FIFO d'entrée dans l'unité de commande de calcul lorsque l'étage actuel du pipeline correspond au premier étage du réseau de calcul ; la première unité d'interconnexion est en outre configurée pour entrer un résultat de calcul délivré par un module de calcul mis en correspondance au sein de l'étage précédent adjacent du réseau de calcul dans l'unité de commande de calcul lorsque l'étage actuel du pipeline ne correspond pas au premier étage du réseau de calcul ;
l'unité de commande de calcul est configurée pour être connectée de manière sélective, selon les deuxièmes informations de configuration, pour former un chemin de passage de données de manière à commander les données entrées dans l'unité de commande de calcul pour passer directement et être transmises à l'unité de compensation sans exécuter de calcul, ou être connectée de manière sélective pour former un chemin de calcul de données de manière à commander les données entrées dans l'unité de commande de calcul pour être transmises à l'unité de compensation après l'exécution du calcul, le chemin de données comprenant le chemin de passage de données et le chemin de calcul de données ;
l'unité de compensation est configurée pour sélectionner, selon les troisièmes informations de configuration, une différence de retard correspondante pour réaliser une compensation de retard sur la profondeur de pipeline du même module de calcul pour obtenir une profondeur de pipeline maximale autorisée par l'étage actuel du réseau de calcul ;
la seconde unité d'interconnexion est configurée pour connecter, selon les premières informations de configuration, la seconde unité d'interconnexion et l'unité de compensation à l'étage actuel du pipeline de la structure de pipeline de chemin de données, la seconde unité d'interconnexion étant configurée pour transmettre des données soumises au traitement de compensation de retard par l'unité de compensation à un FIFO de sortie mis en correspondance dans le groupe FIFO de sortie lorsque l'étage actuel du pipeline correspond au dernier étage du réseau de calcul ; la seconde unité d'interconnexion est en outre configurée pour transmettre les données soumises au traitement de compensation de retard par l'unité de compensation à un module de calcul mis en correspondance au sein de l'étage suivant adjacent du réseau de calcul lorsque l'étage actuel du pipeline ne correspond pas au dernier étage du réseau de calcul ; et
dans le même module de calcul de l'étage actuel du réseau de calcul, une extrémité d'entrée de la première unité d'interconnexion est une extrémité d'entrée du module de calcul, une extrémité de sortie de la première unité d'interconnexion est connectée à une extrémité d'entrée de l'unité de commande de calcul, une extrémité de sortie de l'unité de commande de calcul est connectée à une extrémité d'entrée de l'unité de compensation, une extrémité de sortie de l'unité de compensation est connectée à une extrémité d'entrée de la seconde unité d'interconnexion, et une extrémité de sortie de la seconde unité d'interconnexion est une extrémité de sortie du module de calcul.

2. Processeur reconfigurable selon la revendication 1, dans lequel les troisièmes informations de configuration sont un premier signal de déclenchement et sont utilisées pour sélectionner, parmi tous les modules de calcul de l'étage actuel du pipeline, un chemin de registre mis en correspondance utilisé pour générer la différence de retard dans l'unité de compensation après que l'unité de configuration de reconfiguration a déterminé l'unité de commande de calcul, consommant la profondeur de pipeline maximale, dans l'étage actuel du pipeline de la structure de pipeline de chemin de données, puis commander des données de sortie de l'unité de commande de calcul de l'étage actuel du pipeline pour être transmises sur le chemin de registre jusqu'à ce que les données soient délivrées au module de calcul correspondant, de manière à déterminer : la compensation de retard des profondeurs de pipeline des modules de calcul de l'étage actuel du pipeline à la profondeur de pipeline maximale autorisée par l'étage actuel du réseau de calcul,
la profondeur de pipeline maximale autorisée par l'étage actuel du réseau de calcul étant la profondeur de pipeline de l'unité de commande de calcul où les données mettent le plus de temps à circuler à travers le chemin de données correspondant de la structure de pipeline de chemin de données.

3. Processeur reconfigurable selon la revendication 2, dans lequel le chemin de registre utilisé pour compenser la différence de retard dans l'unité de compensation est composé d'un nombre prédéfini de registres, et ces registres stockent, sous l'effet du déclenchement des troisièmes informations de configuration, des données délivrées par l'unité de commande de calcul au sein du même module de calcul,
la différence de retard générée stockée étant égale à une différence de temps obtenue en soustrayant la profondeur de pipeline maximale autorisée au sein de l'étage actuel du réseau de calcul à partir de la profondeur de pipeline de l'unité de commande de calcul connectée à l'unité de compensation au sein du même module de calcul.

4. Processeur reconfigurable selon la revendication 1, dans lequel les premières informations de configuration comprennent :
l'accès aux informations d'adresse et aux informations de temps requises pour connecter la première unité d'interconnexion dans le réseau de calcul de premier étage et un FIFO d'entrée mis en correspondance agencé dans le groupe FIFO d'entrée à la structure de pipeline de chemin de données,
l'accès aux informations d'adresse et aux informations de temps requises pour connecter la première unité d'interconnexion dans l'étage actuel du réseau de calcul et la seconde unité d'interconnexion mise en correspondance dans l'étage précédent adjacent du réseau de calcul à la structure de pipeline de chemin de données,
l'accès aux informations d'adresse et aux informations de temps requises pour connecter la seconde unité d'interconnexion dans l'étage actuel du réseau de calcul et la première unité d'interconnexion mise en correspondance dans l'étage suivant adjacent du réseau de calcul à la structure de pipeline de chemin de données, et
l'accès aux informations d'adresse et aux informations de temps requises pour connecter la seconde unité d'interconnexion dans le réseau de calcul de dernier étage et un FIFO de sortie mis en correspondance agencé dans le groupe FIFO de sortie à la structure de pipeline de chemin de données,
la première unité d'interconnexion et la seconde unité d'interconnexion prenant toutes deux en charge la formation d'une structure topologique pour l'interconnexion des modules de calcul dans le réseau reconfigurable ou la structure de pipeline de chemin de données, de manière à réaliser des fonctions complètes de l'algorithme.

5. Processeur reconfigurable selon la revendication 1, dans lequel les deuxièmes informations de configuration sont un second signal de déclenchement et sont utilisées pour commander des données transmises par la première unité d'interconnexion pour être délivrées de manière sélective entre le chemin de passage de données et le chemin de calcul de données, de manière à satisfaire aux exigences de calcul de l'algorithme à chaque étage du pipeline de la structure de pipeline de chemin de données.

6. Processeur reconfigurable selon l'une quelconque des revendications 2 à 5, dans lequel les types de calcul exécutés par l'unité de commande de calcul comprennent l'addition et la soustraction, la multiplication, la division, l'extraction de racine carrée et le calcul trigonométrique.
les types de calcul des unités de commande de calcul au sein de chaque étage du réseau de calcul étant soit partiellement identiques, soit totalement identiques, et les types de calcul d'unités de commande de calcul de deux étages adjacents de réseaux de calcul étant soit partiellement identiques, soit totalement identiques.

7. Procédé de configuration sur la base d'un processeur reconfigurable selon l'une quelconque des revendications 1 à 6, le procédé de configuration comprenant :
la connexion, selon des exigences de calcul d'un algorithme mis en correspondance avec un scénario d'application actuel, d'étages adjacents de réseaux de calcul d'un réseau reconfigurable pour former une structure de pipeline de chemin de données qui permet aux données de passer, avec la même profondeur de pipeline, à travers différents modules de calcul au sein du même étage du réseau de calcul et satisfait aux exigences de calcul de l'algorithme mis en correspondance avec le scénario d'application actuel,
chaque étage du pipeline de la structure de pipeline de chemin de données correspondant à un étage du réseau de calcul, le module de calcul étant connecté à un chemin de données au sein d'un étage actuel du réseau de calcul étant un étage actuel du pipeline connecté à la structure de pipeline de chemin de données, et
la profondeur de pipeline étant le temps consommé par les données pour circuler à travers le chemin de données correspondant de la structure de pipeline de chemin de données.

8. Procédé de configuration selon la revendication 7, le procédé de configuration comprenant en outre : la configuration du réseau reconfigurable pour recevoir des données à calculer transmises à partir d'un groupe FIFO d'entrée, et la transmission des données à calculer à la structure de pipeline de chemin de données, et en même temps la configuration du réseau reconfigurable pour délivrer un résultat de calcul d'un réseau de calcul correspondant à un dernier étage de la structure de pipeline de chemin de données à un groupe FIFO de sortie, le processeur reconfigurable comprend le groupe FIFO d'entrée et le groupe FIFO de sortie.

9. Procédé de configuration selon la revendication 8, dans lequel un procédé de configuration spécifique pour la connexion afin de former la structure de pipeline de chemin de données comprend :
le fait de déterminer, au sein d'un module de calcul de l'étage actuel du réseau de calcul, si l'étage actuel du réseau de calcul est détecté comme un pipeline de premier étage correspondant à la structure de pipeline de chemin de données ou non, dans un cas où l'étage actuel du réseau de calcul est détecté comme le pipeline de premier étage correspondant à la structure de pipeline de chemin de données, la connexion d'une première unité d'interconnexion et d'une unité de commande de calcul pour former le pipeline de premier étage de la structure de pipeline de chemin de données, et la configuration de la première unité d'interconnexion pour entrer des données à calculer délivrées par une extrémité de sortie mise en correspondance au sein du groupe FIFO d'entrée dans l'unité de commande de calcul ; dans un cas où l'étage actuel du réseau de calcul n'est pas détecté comme le pipeline de premier étage correspondant à la structure de pipeline de chemin de données, la connexion de la première unité d'interconnexion et de l'unité de commande de calcul pour former l'étage actuel du pipeline de la structure de pipeline de chemin de données, et la configuration de la première unité d'interconnexion pour entrer le résultat de calcul délivré par un module de calcul mis en correspondance au sein de l'étage précédent adjacent du réseau de calcul dans l'unité de commande de calcul ;
le fait de déterminer si l'étage actuel du réseau de calcul est détecté comme un pipeline de dernier étage correspondant ou non, dans un cas où l'étage actuel du réseau de calcul est détecté comme le pipeline de dernier étage correspondant, la connexion d'une seconde unité d'interconnexion et d'une unité de compensation pour former le pipeline de dernier étage de la structure de pipeline de chemin de données, et la configuration de la seconde unité d'interconnexion pour transmettre des données soumises au traitement de compensation de retard par l'unité de compensation à un FIFO de sortie mis en correspondance au sein du groupe FIFO de sortie ; et dans un cas où l'étage actuel du réseau de calcul n'est pas détecté comme le pipeline de dernier étage correspondant, la connexion de la seconde unité d'interconnexion et de l'unité de compensation pour former l'étage actuel du pipeline de la structure de pipeline de chemin de données, et la configuration de la seconde unité d'interconnexion pour transmettre les données soumises au traitement de compensation de retard par l'unité de compensation à un module de calcul mis en correspondance au sein de l'étage suivant adjacent du réseau de calcul ;
le fait de déterminer si l'unité de commande de calcul détecte un signal de déclenchement de calcul ou non, dans un cas où l'unité de commande de calcul détecte le signal de déclenchement de calcul, la configuration de données, entrées dans l'unité de commande de calcul, pour être délivrées à l'unité de compensation après l'exécution du calcul, et dans un cas où l'unité de commande de calcul ne détecte pas le signal de déclenchement de calcul, la configuration des données, entrées dans l'unité de commande de calcul, pour passer directement et être transmises à l'unité de compensation sans exécuter le calcul, le signal de déclenchement de calcul est utilisé pour commander des données transmises par la première unité d'interconnexion pour être sélectivement délivrées entre le chemin de passage de données et le chemin de calcul de données, de manière à satisfaire aux exigences de calcul de l'algorithme à chaque étage du pipeline de la structure de pipeline de chemin de données ;
puis, la configuration de l'unité de compensation pour sélectionner une différence de retard correspondante afin de réaliser un traitement de retard sur les données délivrées de l'unité de commande de calcul au sein du même module de calcul, de manière à réaliser une compensation de retard sur la profondeur de pipeline du même module de calcul jusqu'à la profondeur de pipeline maximale autorisée par l'étage actuel du réseau de calcul, la profondeur de pipeline maximale autorisée par l'étage actuel du réseau de calcul étant la profondeur de pipeline de l'unité de commande de calcul où les données mettent le plus de temps à circuler à travers le chemin de données au sein de l'étage actuel du réseau de calcul, le module de calcul comprend l'unité de commande de calcul, l'unité de compensation, la première unité d'interconnexion et la seconde unité d'interconnexion, dans le même module de calcul de chaque étage du réseau de calcul, une extrémité d'entrée de la première unité d'interconnexion étant une extrémité d'entrée du module de calcul, une extrémité de sortie de la première unité d'interconnexion étant connectée à une extrémité d'entrée de l'unité de commande de calcul, une extrémité de sortie de l'unité de commande de calcul étant connectée à une extrémité d'entrée de l'unité de compensation, une extrémité de sortie de l'unité de compensation étant connectée à une extrémité d'entrée de la seconde unité d'interconnexion, et une extrémité de sortie de la seconde unité d'interconnexion étant une extrémité de sortie du module de calcul.

10. Procédé de configuration selon la revendication 9, dans lequel, dans le réseau reconfigurable, deux étages non adjacents de réseaux de calcul ne sont pas en connexion inter-étages à travers le chemin de données, de sorte que les deux étages non adjacents de réseaux de calcul ne sont pas directement connectés pour former la structure de pipeline de chemin de données ; et il n'y a pas de chemin de données entre différents modules de calcul au sein du même étage de réseau de calcul, le chemin de données étant un chemin pour la transmission de données.
